# EUROPEAN PATENT SPECIFICATION

(11) **EP 2 966 584 B1**
(45) Date of publication and mention of the grant of the patent: **02.09.2020**
(21) Application number: 15175697.0
(22) Date of filing: 07.07.2015
(51) Int. Cl.: G06F 21/10

(54) **INFORMATION PROCESSING SYSTEM, INFORMATION PROCESSING APPARATUS, METHOD OF ADMINISTRATING LICENSE, AND PROGRAM**
INFORMATIONSVERARBEITUNGSSYSTEM, INFORMATIONSVERARBEITUNGSVORRICHTUNG, VERFAHREN ZUR VERWALTUNG VON LIZENZEN UND PROGRAMM
SYSTÈME DE TRAITEMENT D'INFORMATIONS, APPAREIL DE TRAITEMENT D'INFORMATIONS, PROCÉDÉ DE GESTION DE LICENCE ET PROGRAMME

(30) Priority: 08.07.2014 JP 2014140218; 31.10.2014 JP 2014223272
(43) Date of publication of application: 13.01.2016
(73) Proprietor: Ricoh Company, Ltd., Tokyo 143-8555 (JP)
(72) Inventor: Takemoto, Ryoh, Ohta-ku, Tokyo 143-8555 (JP); Ohzaki, Hiroki, Ohta-ku, Tokyo 143-8555 (JP); Nakajima, Masato, Ohta-ku, Tokyo 143-8555 (JP)
(74) Representative: White, Duncan Rohan

(56) References cited:
- EP-A2- 2 595 368
- WO-A1-2011/052145
- US-A1- 2007 005 505
- US-A1- 2012 293 831
- US-A1- 2012 317 621
- US-A1- 2014 122 350

## Description

### BACKGROUND OF THE INVENTION

### 1. Field of the Invention

The present invention relates to an information processing system, an information processing apparatus, a method of administrating a license, and a program.

### 2. Description of the Related Art

Among applications installed in, for example, a client and used, there is the application which permits a connection to a server while limiting a usable user or the number of the users. For example, there is a known technique where licenses permit a given number of uses, and where a use exceeding the permitted number of uses is not permitted (for example, see Patent Document 1).

Patent Document 1: Japanese Patent No. 5157520

Recent years, increasing is a new mode of providing a service where only a necessary function can be used when a user needs it. In a case where the service can be used by the above new mode of providing the service, the user purchases, for example, a license from a sales company (a distributor) of the service.

A service distributor administers the license issued to the user by, for example, a business system. The service providing system judges whether the service is provided to the user based on the license issued by the business system.

However, in a case where the number of users to whom an authority is allocated is administerd by the license, it was not easy to administer the license issued by the business system for each service type.

US2012/317621A discloses a screen to be presented to a customer administrator generated according to the license status. Also, as a license status, a processing status is provided in which the customer administrator is prohinited to perform operations during asynchronous license status change processing

### SUMMARY OF THE INVENTION

The invention is in the system of claim 1, the medium of claim 7 and the method of claim 8.

Additional objects and advantages of the embodiments will be set forth in part in the description which follows, and in part will be clear from the description, or may be learned by practice of the invention. Objects and advantages of the invention will be realized and attained by means of the elements and combinations particularly pointed out in the appended claims.

### BRIEF DESCRIPTION OF THE DRAWINGS

FIG. 1 illustrates a structure of an exemplary information processing system of a first embodiment.
FIG. 2 illustrates a structure of another exemplary service providing system.
FIG. 3 illustrates a hardware structure of an exemplary computer system.
FIG. 4 is a processing block chart of an exemplary service providing system of the first embodiment.
FIG. 5 is a processing block chart of another exemplary service providing system of the first embodiment.
FIG. 6 explains the license information in a license administration apparatus of a business system and a service providing apparatus of a common service system.
FIG. 7 explains the license information in a license administration apparatus of a business system and a service providing apparatus of a common service system.
FIG. 8 explains an API used by the license administration apparatus of the business system and the service providing apparatus of the common service system.
FIG. 9 explains the API used by the license administration apparatus of the business system and the service providing apparatus of the common service system.
FIG. 10 illustrates a structure of an exemplary organization information.
FIG. 11 illustrates a structure of exemplary user information.
FIG. 12 illustrates a structure of exemplary license information.
FIG. 13 illustrates a structure of exemplary activated apparatus view information.
FIG. 14 illustrates a structure of exemplary apparatus information.
FIG. 15 is a sequence chart of an exemplary process of issuing an organization ID.
FIG. 16 is a sequence chart of an exemplary process of opening an organization.
FIG. 17 is a sequence chart of an exemplary process of issuing an service ID.
FIG. 18 is a sequence chart of an exemplary process of registering the apparatus license.
FIG. 19 is an exemplary image chart of a service access administration screen.
FIG. 20 is a sequence chart of an exemplary process of setting a user to whom a use authority is given for each service type.
FIG. 21 illustrates a structure of an exemplary list of service authority information.
FIG. 22 illustrates a structure of an exemplary service permission table.
FIG. 23 illustrates an image of an exemplary use authority setup screen of a scan service application.
FIG. 24 illustrates an exemplary structure of a user authority list.
FIG. 25 is a sequence chart of an exemplary process of setting the user to whom the use authority is given for each license.
FIG. 26 illustrates another exemplary structure of the service permission table.
FIG. 27 illustrates an image of an exemplary use authority setup screen of a scan service application.
FIG. 28 is a sequence chart of an exemplary process of renewing a contracted service.
FIG. 29 is a sequence chart of an exemplary process of cancelling the service.
FIG. 30 is a flowchart of an exemplary process of reviewing an allocation of the use authority.
FIG. 31 illustrates a structure of another exemplary list of service authority information.
FIGs. 32A and 32B illustrate structures of exemplary user information of a user of a list of the service authority information and a user authority list.
FIG. 33 illustrates a structure of exemplary user information rearranged in a priority order.
FIG. 34 illustrates a structure of an exemplary user authority list in which a use authority is released.
FIG. 35 illustrates a structure of an exemplary e-mail reporting a release of the use authority of a service.
FIG. 36 is a sequence chart of an exemplary process of continuing an ending service.
FIG. 37 is an image chart of an exemplary service selection screen.
FIG. 38 is a sequence chart of an exemplary process of storing service permission information.
FIG. 39 illustrates an exemplary structure of a service permission table.
FIG. 40 is a flowchart of an exemplary process of renewing the service permission table.
FIG. 41 is a flowchart of another exemplary process of renewing the service permission table.
FIG. 42 is a sequence chart of an exemplary process of determining whether the service can be performed or not.

### DETAILED DESCRIPTION OF THE PREFERRED EMBODIMENTS

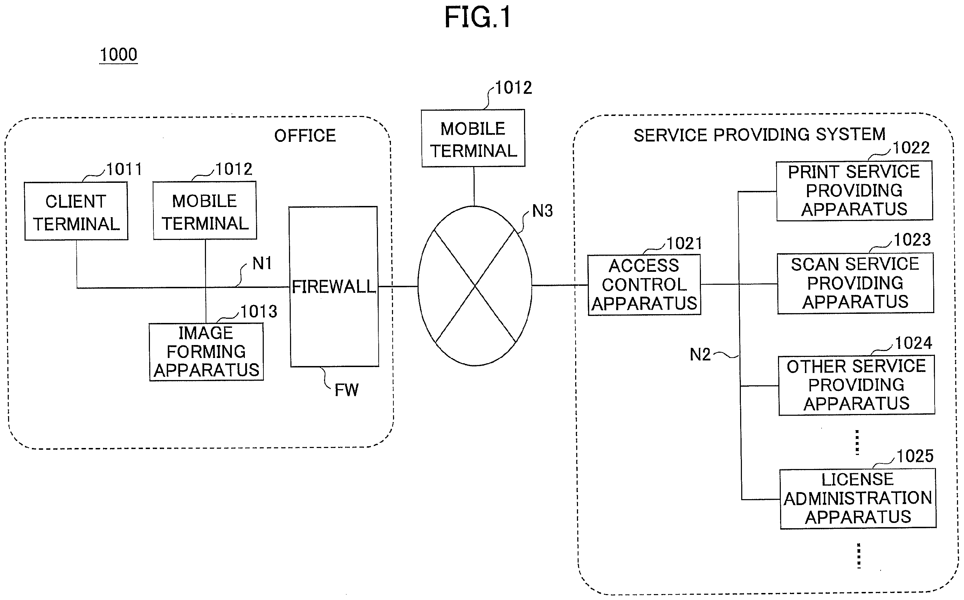

A description is given below, with reference to the FIG. 1 through FIG. 42 of embodiments of the present invention. Where the same reference symbols are attached to the same parts, repeated description of the parts is omitted.

Reference symbols typically designate as follows:
1000: information processing system;
1011: client terminal;
1012: mobile terminal;
1013: image forming apparatus;
1021: access control apparatus;
1022: print service providing apparatus;
1023: scan service providing apparatus;
1024: other service providing apparatus;
1025: license administration apparatus;
1051: portal service providing apparatus;
1052: print service providing apparatus;
1053: scan service providing apparatus;
1061: authentication service providing apparatus;
1062: data process service providing apparatus;
1063: temporary data storage service providing apparatus;
1071: authentication information memory apparatus;
1072: job information memory device;
1073: temporary data memory apparatus;
1081: license administration apparatus;
1082: client information administration apparatus;
1100: service providing system;
1101: application;
1102: common service;
1103: database;
1104: platform Application Programming Interface (API);
1105: business service;
1106: domain inherent service;
1107: domain inherent API;
1111: portal service application;
1112: scan service application;
1112a: UI unit of scan service application;
1112b: logic unit of scan service application;
1113: print service application;
1113a: UI unit of print service application;
1113b: logic unit of print service application;
1121: authentication and permission unit;
1122: organization administration unit;
1123: user administration unit;
1124: license administration unit for providing service;
1125: apparatus administration unit;
1126: temporary image storing unit;
1127: image processing workflow controlling unit;
1128: log collection unit;
1131: message queue;
1132: worker;
1141: log information memory unit;
1142: organization information memory unit;
1143: user information memory unit;
1144: license information memory unit;
1145: apparatus information memory unit;
1146: temporary image memory unit;
1147: job information memory apparatus;
1148: setup information memory unit inherent in application;
1149: service permission information memory unit;
1151: client information administration unit;
1152: contract administration unit;
1153: sales administration unit;
1154: business license administration unit;
1201: business terminal;
1202: user terminal;
1203: multifunction peripheral (MFP);
1204, 1205: data center;
1206: license administration server;
1207, 1209: license DB;
1208: service providing apparatus;
1210: business application;
1211: service providing application;
1212: business API;
1213: platform API;
1500: computer system;
1501: input device;
1502: display device;
1503: external I/F;
1503a: recording medium;
1504: RAM;
1505: ROM;
1506: CPU;
1507: communication I/F;
1508: HDD;
B: bus;
FW: firewall; and
N1-N3: network.

### [First Embodiment]

### <System Structure>

Fig. 1 illustrates a structure of an exemplary information processing system of a first embodiment. The information processing system 1000 illustrated in FIG. 1 includes, for example, a network N1 such as an inter-office network in an office, a network N2 of a service providing system represented by a cloud service, and a network N3 such as the Internet.

The network N1 is a private network located inside a firewall FW. The firewall FW is installed at a node between the network N1 and the network N3. The firewall FW detects and blocks an unauthorized access. A client terminal 1011, a mobile terminal 1012, and an image forming apparatus 1013 such as a multifunction peripheral are connected to the network N1.

The client terminal 1011 is an example of a terminal apparatus. The client terminal 1011 can be substantialized by an information processing apparatus, in which an ordinary OS or the like is installed. The client terminal 1011 includes a wired or wireless communication means. The client terminal 1011 is a terminal, which can be operated by a user, such as a tablet PC or a notebook PC.

The mobile terminal 1012 is an example of the terminal apparatus. The mobile terminal 1012 includes a wired or wireless communication means.The mobile terminal 1012 such as a smartphone, a mobile phone, a tablet PC, a notebook PC, or the like, can be carried by the user.

The image forming apparatus 1013 is an apparatus having an image forming function such as a multifunction peripheral. The image forming apparatus 1013 includes a wireless or wired communication means. The image forming apparatus 1013 is an apparatus of performing processes related to an image formation such as a multifunction peripheral, a copier, a scanner, a printer, a laser printer, a projector, and an electronic blackboard. Referring to FIG. 1, the number of the client terminal 1011, the number of the mobile terminal 1012, and the number of the image forming apparatus 1013 are one, for example. However, the numbers of the client terminal 1011, the mobile terminal 1012, and the image forming apparatus 1013 may be plural.

The network N2 is connected to the network N3 by an access control apparatus 1021. Security of the network N2 is protected by the access control apparatus 1021. A print service providing apparatus 1022, a scan service providing apparatus 1023, another service providing apparatus 1024, a license administration apparatus 1025, and so on are connected to the network N2.

In the information processing system 1000, the access control apparatus 1021, the print service providing apparatus 1022, the scan service providing apparatus 1023, the other service providing apparatus 1024, the license administration apparatus 1025, and so on substantialize the service providing system. The print service providing apparatus 1022, the scan service providing apparatus 1023, and the another service providing apparatus 1024 provide a print service, a scan service, and another service. The license administration apparatus 1025 performs a process related to license administration.

The access control apparatus 1021 controls a login to the print service provided by the print service providing apparatus 1022, the scan service provided by the scan service providing apparatus 1023, or the like.

The access control apparatus 1021, the print service providing apparatus 1022, the scan service providing apparatus 1023, the other service providing apparatus 1024, and the license control apparatus 1025 are substantialized by at least one information processing apparatus.

The access control apparatus 1021, the print service providing apparatus 1022, the scan service providing apparatus 1023, the other service providing apparatus 1024, and the license administration apparatus 1025 may be substantialized by incorporating their functions into one information processing apparatus or by distributing their functions into multiple information processing apparatuses.

A part of the service on the side of the network N2 may exist outside the network N2. The mobile terminal 1012 may exist outside the network N1 such as the inter-office network. In the information processing system 1000 illustrated in FIG. 1, the mobile terminal 1012 exists in the network N1 and the network N3.

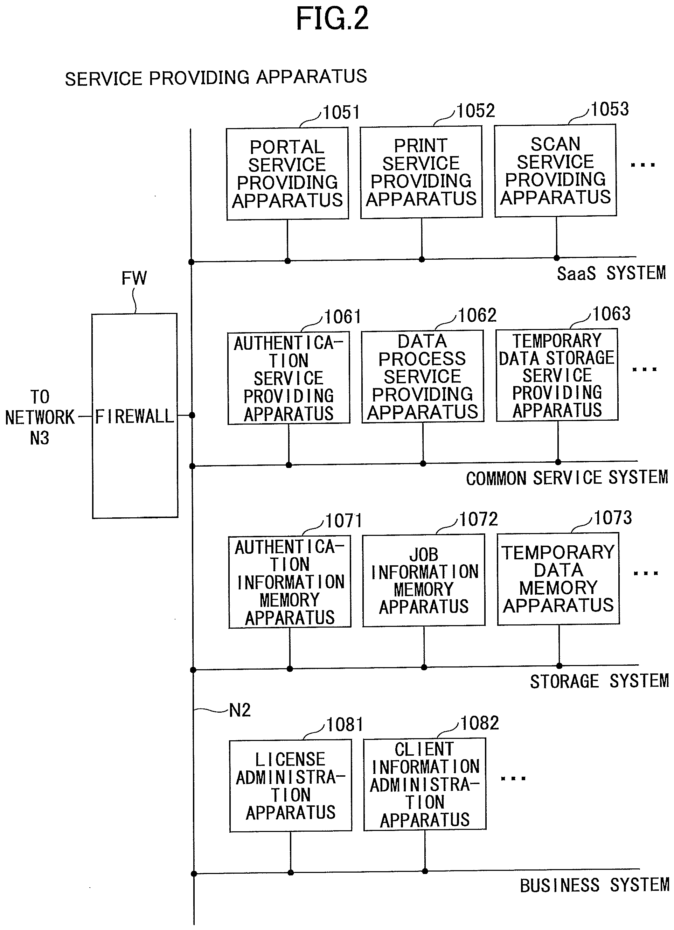

The structure of the service providing system illustrated in FIG. 1 is an example. The service providing system may be substantialized by a structure illustrated in FIG. 2. FIG. 2 illustrates a structure of another exemplary service providing system. In the service providing system illustrated in FIG. 2, the network N2 is connected to the network N3 by the firewall FW.

A service providing system of a Software as a Service (SaaS) system, a service providing system of a common service (Network Service Platform) system, a memory apparatus of a storage (Storage) system, and an administration apparatus of a business system are connected to the network N2. Here, the service providing apparatus of the common service system provides a service used in common by the service providing apparatus of the SaaS system.

The service providing apparatus of the SaaS system includes a service providing apparatus corresponding to provided services, such as a portal service providing apparatus 1051, a print service providing apparatus 1052, a scan service providing apparatus 1053, or the like. The service providing apparatus of the common service system includes a service providing apparatus corresponding to common services to be provided, such as an authentication service providing apparatus 1061, a data process service providing apparatus 1062, or a temporary data storage service providing apparatus 1063.

The memory apparatus of the storage system includes a memory apparatus corresponding to information (data) to be stored, such as an authentication information memory apparatus 1071, a job information memory apparatus 1072, or a temporary data memory apparatus 1073. The administration apparatus of the business system includes an administration apparatus corresponding to information to be administered, such as a license administration apparatus 1081 or a client information administration apparatus 1082.

In the service providing system illustrated in FIG. 2, security is protected by, for example, the firewall FW or an authentication service provided by an authentication service providing apparatus 1061. The structure of the service providing system illustrated in FIG. 2 is an example. The service providing system may have another structure. Various apparatuses, various terminals, and the networks forming the service providing system illustrated in FIGs. 1 and 2 may be constructed on a virtual environment.

### <Hardware Structure>

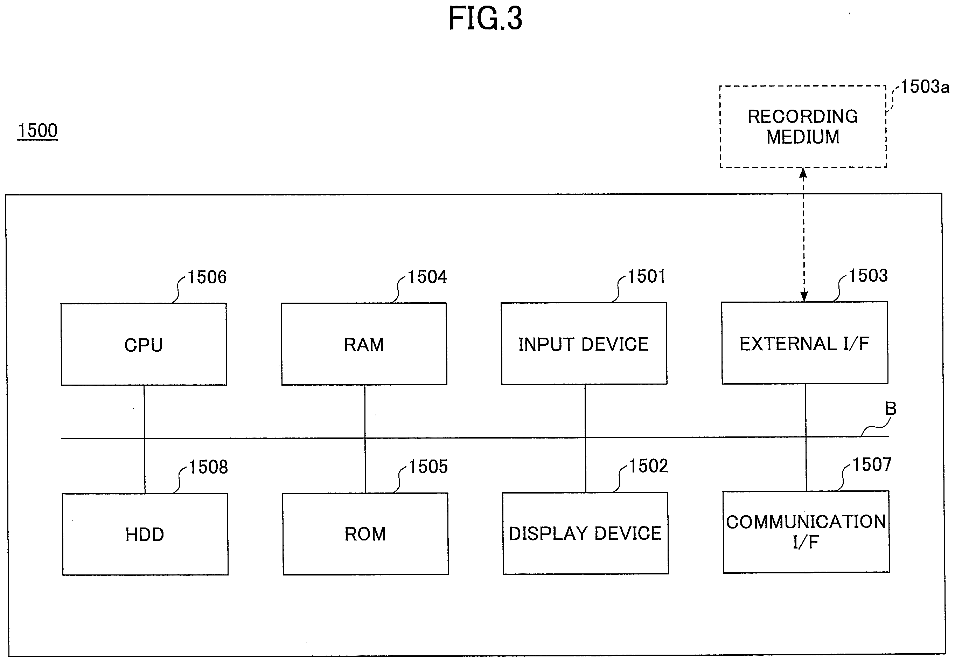

The client terminal 1011 and the mobile terminal 1012 are substantialized by a computer system having, for example, a hardware structure illustrated in FIG. 3. The access control apparatus 1021, the print service providing apparatus 1022, the scan service providing apparatus 1023, the other service providing apparatus 1024, and the license administration apparatus 1025 are substantialized by the computer system having, for example, the hardware structure illustrated in FIG. 3.

The service providing apparatus of the SaaS system, the service providing apparatus of the common service system, the memory apparatus of the storage system, and the administration apparatus of the business system, which are illustrated in FIG. 2, may be substantialized by a computer system having, for example, the hardware structure illustrated in FIG. 3.

FIG. 3 illustrates a hardware structure of an exemplary computer system. Referring to FIG. 3, the computer system 1500 includes an input device 1501, a display device 1502, an external I/F 1503, a RAM 1504, a ROM 1505, a CPU 1506, a communication I/F 1507, a HDD 1508, and so on. In the computer system 1500, the input device 1501, the display device 1502, the external I/F 1503, the RAM 1504, the ROM 1505, the CPU 1506, the communication I/F 1507, the HDD 1508, and so on are mutually connected by the bus B.

The input device 1501 includes a keyboard, a mouse, a touch panel, and the like, by which the user can input various operation signals. The display device 1502 includes a display or the like to display a processing result acquired by the computer system 1500.

The communication I/F 1507 is an interface provided to connect the computer system 1500 to the networks N1 to N3. Thus, the computer system 1500 can perform data communications with another apparatus and/or another terminal through the communication I/F 1507.

The Hard Disk Drive (HDD) 1508 is a nonvolatile memory device storing programs and/or data. The program and/or data to be stored is, for example, an operating system (OS), which is basic software controlling the entire computer system 1500, application software providing various functions in the OS, and so on.

Further, the HDD 1508 administrates the stored program and the stored data using a predetermined file system and/or a predetermined data base (DB). The external I/F 503 is an interface connected with an external apparatus. The external apparatus includes a recording medium 1503a or the like. With this, the computer system 1500 can read information from the recording medium 1503a and/or write information to the recording medium 1503a through the external I/F 1503.

The recording medium 1503a includes, for example, a flexible disk, a compact disk (CD), a digital versatile disk (DVD). The recording medium 1503a may be an SD memory card, a universal serial bus (USB) memory, or the like.

The read only memory (ROM) 1505 is a nonvolatile semiconductor memory (a memory device), which can hold a program and/or data even when a power source is powered off. The ROM 1505 stores programs and data used for a basic input/output system (BIOS), OS setup, network setup, or the like, which are executed at a time of booting up the computer system 1500.

The random access memory (RAM) 1504 is a volatile semiconductor memory (a memory device) temporarily storing a program and/or data. The central processing unit (CPU) 1506 reads out a program and/or data into the RAM 1504 from the memory device such as the ROM 1505, the HDD 1508, or the like. The read program or data perform the process to thereby entirely substantialize controls or functions of the computer system 1500.

With such a hardware structure of the computer system 1500, the client terminal 1011 and the mobile terminal 1012 can substantialize various processes described later. The access control apparatus 1021, the print service providing apparatus 1022, the scan service providing apparatus 1023, the other service providing apparatus 1024, and the license administration apparatus 1025 can perform various processes described later by the hardware structure of the computer system 1500. The service providing apparatus of the SaaS system, the service providing apparatus of the common service system, the memory apparatus of the storage system, and the administration apparatus of the business system, which are illustrated in FIG. 2, can perform various processes described later by the hardware structure of the computer system 1500. A description of the hardware structures of the image forming apparatus 1013 and the firewall FW, which are illustrated in FIG. 1, is omitted.

### <Software structure>

### <<Service Providing System>>

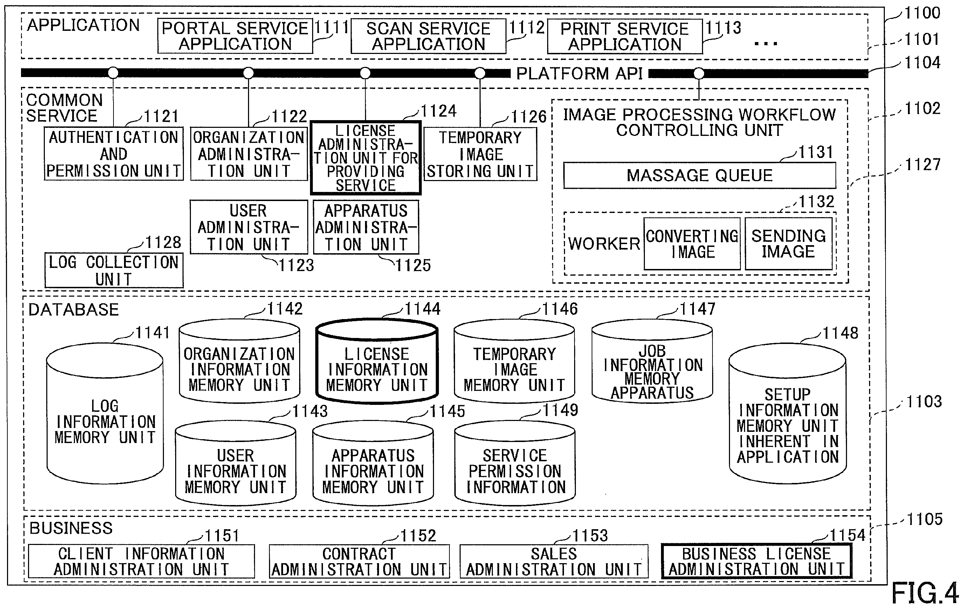

The service providing system of the first embodiment is substantialized by, for example, a processing block illustrated in FIG. 4. FIG. 4 is a processing block chart of an exemplary service providing system of the first embodiment. The service providing system 1100 substantializes the processing block illustrated in FIG. 4 by executing the program.

The service providing system 1100 illustrated in FIG. 4 substantializes an application 1101, a common service 1102, a database (DB) 1103, a platform API 1104, and a business service 1105.

The application 1101 has a portal service application 1111, a scan service application 1112, and a print service application 1113 as an example.

The portal service application 1111 is an application providing a portal service. The portal service provides a service as an entrance for using the service providing system 1100. The scan service application 1112 is an application for providing the scan service. The print service application 1113 is an application providing the print service. The application 1101 may include another service application.

The platform Application Programming Interface (API) platform 1104 is an interface used by the application 1101 such as the portal service application 1111 when the application 1101 uses the common service 1102. The platform API 1104 is an interface previously defined so that the common service 1102 receives a request from the application 1101. The platform API 1104 is structured by, for example, a function, a class, or the like.

The platform API 1104 can be substantialized by, for example, Web API, which can be used through the network when the service providing system 1100 is structured by multiple information processing apparatuses.

The common service 1102 includes an authentication and permission unit 1121, an organization administration unit 1122, a user administration unit 1123, a license administration unit 1124 for providing a service, an apparatus administration unit 1125, a temporary image storing unit 1126, an image processing workflow controlling unit 1127, and a log collection unit 1128.

The image processing workflow controlling unit 1127 includes a message queue 1131 and at least one worker (Worker) 1132. The worker 1132 substantializes a function such as an image conversion or an image transmission.

The authentication and permission unit 1121 performs authentication and/ or permission based on a login request received from an office apparatus such as the client terminal 1011, the image forming apparatus 1013, or the like. The office apparatus is a general term of the client terminal 1011, the mobile terminal 1012, the image forming apparatus 1013, and so on.

The authentication and permission unit 1121 accesses, for example, a user information memory unit 1143, a service permission information memory unit 1149, or the like, which are described below, and authenticates and/or permits the user. The authentication and permission unit 1121 accesses, for example, the apparatus information memory unit 1145, the service permission information memory unit 1149, or the like, which are described below, and authenticates the image forming apparatus or the like. Further, the authentication and permission unit 1121 administers the service permission information stored in the service permission information memory unit described below.

The organization administration unit 1122 administers organization information stored in the organization information memory unit 1142 described below. The user administration unit 1123 administers the user information stored in the user information memory unit 1143 described below.

The license administration unit 1124 for providing the service administers the license information stored in the license information memory unit 1144 described below. The apparatus administration unit 1125 administers apparatus information stored in the apparatus information memory unit 1145 described later. The temporary image storing unit 1126 stores a temporary image in the temporary image memory unit 1146 to be described later and acquires the temporary image from the temporary image memory unit 1146.

The image processing workflow controlling unit 1127 controls a workflow related to image processing based on a request from the application 1101. The message queue 1131 includes queues corresponding to types of the processes. The image processing workflow controlling unit 1127 inputs a message of a request related to a process (a job) into the queue corresponding to the type of the job.

The worker 1132 monitors the corresponding queue. When the message is input to the queue, the worker 1132 performs a process such as an image conversion or an image transmission corresponding to the type of the job. The message input to the queue may be mainly read out (Pull) by the worker 1132, or may be provided (Push) from the queue to the worker 1132.

The database 1103 includes a log information memory unit 1141, an organization information memory unit 1142, a user information memory unit 1143, a license information memory unit 1144, an apparatus information memory unit 1145, a temporary image memory unit 1146, a job information memory unit 1147, a setup information memory unit inherent in the application 1148, and a ticket information memory unit 1149.

The log information memory unit 1141 stores log information. The organization information memory unit 1142 stores organization information describe below. The user information memory unit 1143 stores user information described below. The license information memory unit 1144 stores license information described below. The apparatus information memory unit 1145 stores apparatus information described below.

The temporary image memory unit 1146 stores a temporary image. The temporary image is a file or data such as a scanned image processed by, for example, the worker 1132. The job information memory unit 1147 stores information (job information) of the request related to the process (the job).

The setup information memory unit 1148 inherent in the application stores setup information inherent in the application 1101. The service permission information memory unit 1149 stores service permission information described below.

The business service 1105 includes a client information administration unit 1151, a contract administration unit 1152, a sales administration unit 1153, and a business license administration unit 1154. The client information administration unit 1151 administers client information. The contract administration unit 1152 administers contract information. The sales administration unit 1153 administers sales information. The business license administration unit 1154 administers license information. The business license administration unit 1154 includes a license DB storing the license information.

The service providing system 1100 functions as an integrated platform for providing a common service such as authentication and permission or a workflow related to image processing and a service group for providing an application service such as the scan service, the print service, or the portal service.

The integrated platform is formed by including, for example, the common service 1102, the database 1103, the platform API 1104, and the business service 1105. Further, the service group is formed by, for example, the application 1101. As described, in the service providing system 1100 illustrated in FIG. 4, the application 1101 and the business service 1105 are separated.

In the service providing system 1100 illustrated in FIG. 4, by adopting the structure where the service group and the integrated platform are separated, it is possible to easily develop the application 1104 using the platform API 1104.

A mode of classifying the processing blocks of the service providing system 1100 illustrated in FIG. 4 is an example. It is unnecessary that the application 1101, the common service 1101, the database 1103, and the business service 1105 are classified in a hierarchy illustrated in FIG. 4. As long as the processes of the service providing system 1100 of the first embodiment can be performed, a relationship of the hierarchy illustrated in FIG. 4 is not specifically limited.

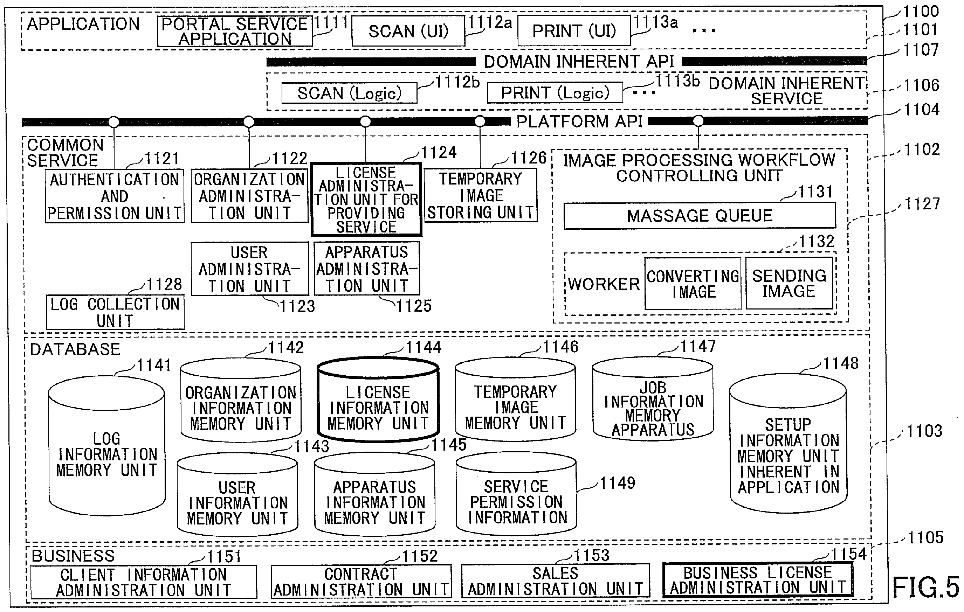

For example, the processing blocks of the service providing system 1100 illustrated in FIG. 4 may be processing blocks illustrated in FIG. 5. FIG. 5 is a processing block chart of another exemplary service providing system of the first embodiment. Because the service providing system 1100 illustrated in FIG. 5 is similar to the service providing system 1100 illustrated in FIG. 4 except for a part, explanation is appropriately omitted for the same parts.

The service providing system 1100 substantializes a domain inherent service 1106 and a domain inherent API 1107 in addition to the processing blocks illustrated in FIG. 4 by performing the program. The service providing system 1100 illustrated in FIG. 5 differs from the service providing system 1100 illustrated in FIG. 5 at the application 1101, the domain inherent service 1106, and the domain inherent API 1107. The application illustrated in FIG. 5 includes the portal service application 1111, an UI unit 1112a of the scan service application, and an UI unit 1113a of the print service application. The domain inherent service 1106 includes a logic unit 1112b of the scan service application and a logic unit 1113b of the print service application, as an example.

The logic unit 1112b of the scan service application and the logic unit 1113b of the print service application, which are logics inherent in the domain, are accessed by the client such as the mobile terminal 1012 or the image forming apparatus 1013 other than the Web browser. For the client other than the Web browser, the UI unit such as the UI unit 1112a of the scan service application is arranged on the client side. Therefore, it is sufficient for the server side to be able to provide the domain inherent API 1107.

As such, in the service providing system 1100 illustrated in FIG. 5, the access from the web browser is received by the UI unit such as the UI unit 1112a of the scan service application. Further, the access from the client other than the web browser is received by a logic unit such as the logic unit 1112b of the scan service application. Because the frequency of accessing from the web browser is different from the frequency of accessing from the client other than the web browser, the client and the web browser are arranged as separate servers to effectively perform a scale out along with an increment of the frequencies. In the service providing system 1100 illustrated in FIG. 5, it is possible to construct a composite application by additionally using the domain inherent API 1107.

As described, the service providing systems 1100 illustrated in FIGs. 4-5 include the license information stored in the license information memory unit 1144 and the license information stored in the license DB of the business license administration unit 1154.

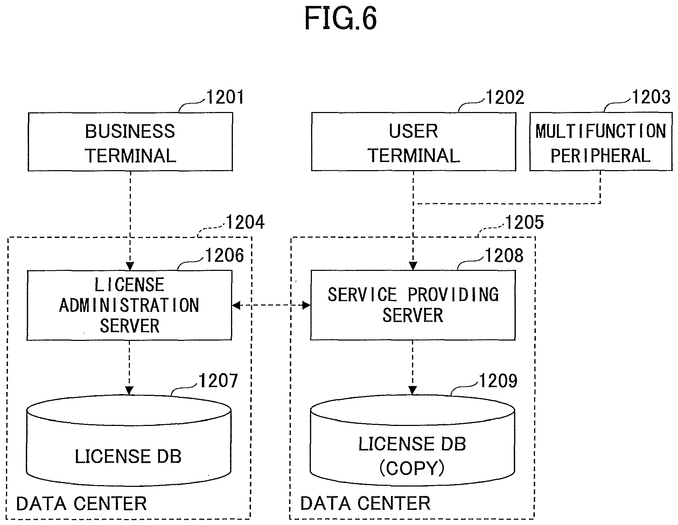

FIG. 6 explains the license information in the license administration apparatus of the business system and the service providing apparatus of the common service system. Referring to FIG. 6, the license information memory unit 1144 corresponds to a license DB 1209. A license DB of the business license administration unit 1154 is represented by a license DB 1207. The license DB 1207 is a master of the license information. The license DB 1209 is a copy (duplication) of the license information.

Referring to FIG. 6, the business license administration unit 1154 corresponds to a license administration server 1206. Further, the application 1101, the common service 1102, the database (DB) 1103, and the platform API 1104 are represented by the service providing apparatus 1208. The license administration server 1206 and the license DB 1207 are located in, for example, a data center 1204 located close to a center of operating the business (e.g., a head office) so as to be uniformly administered.

Further, the service providing apparatus 1208 and the license DB 1209 are located in a data center 1205 located close to the user in order to improve a response performance. The data center 1205, in which the service providing apparatus 1208 and the license DB 1209 are located, may be located in multiple locations. The data center 1204 is connected to the data center 1205 by, for example, a private line or a VPN circuit so as to limit the server using a firewall.

The business terminal 1201 corresponds to the client terminal 1011 or the like operated by a business controller. The user terminal 1202 is the client terminal 1011 or the like operated by a user such as the administrator. A multifunction peripheral (MFP) 1203 is an example of the image forming apparatus 1013.

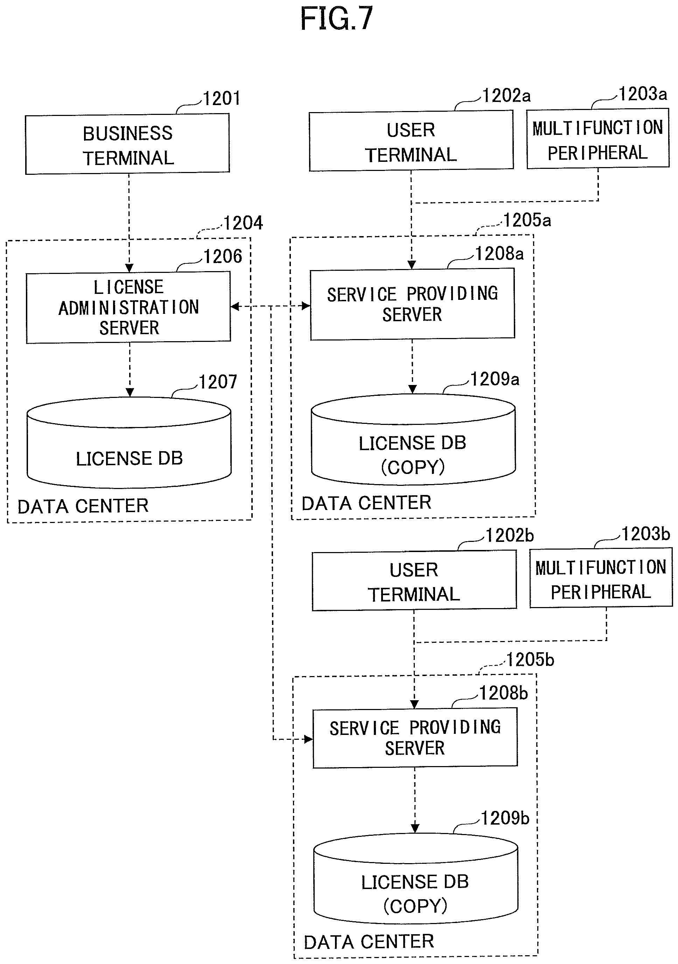

FIG. 7 illustrates a case where there are multiple locations of the data centers 1205. FIG. 7 explains the license information in the license administration apparatus of the business system and the service providing apparatus of the common service system. FIG. 7 illustrates a case where two locations, namely the data centers 1205a and 1205b, exist.

For example, the data centers 1205a and 1205b are located in association with regions (sales regions) where the sales are done. Borders of the sales regions are variously determined in consideration of business modes such as North America, Europe, or Japan.

The license administration server 1206 issues the license information and reports the issuance of the license information while distributing the license information and the reports into the data centers 1205a and 1206b corresponding to the designated sales regions when the license administration server 1206 receives a request of issuing the license information, in which the sales region is designated, from the business terminal 1201. The license information issued by the license administration server 1206 is uniquely selected regardless of the sales regions.

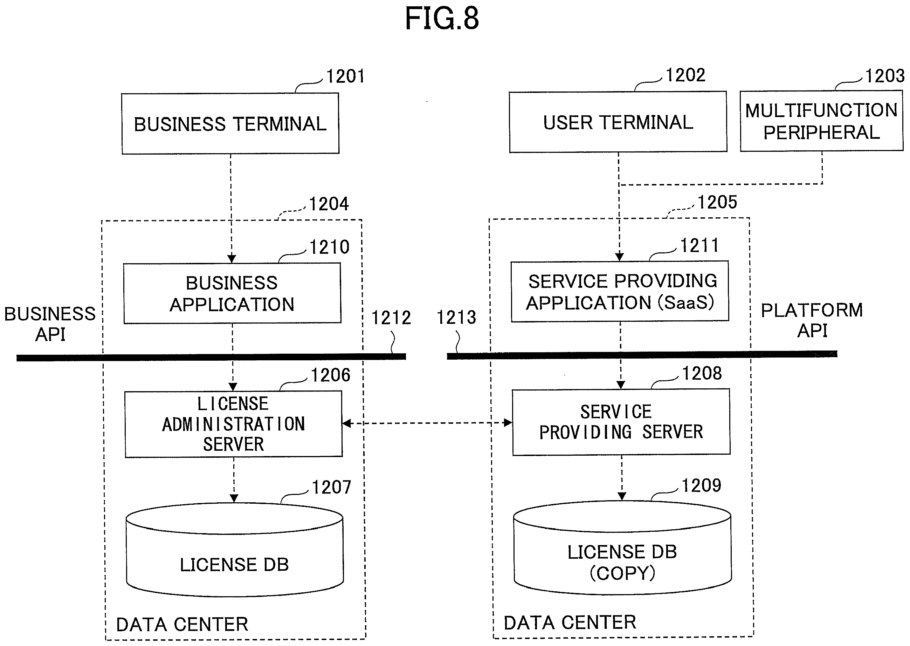

FIG. 8 explains an API used by the license administration apparatus of the business system and the service providing apparatus of the common service system. Referring to FIG. 8, a business application 1210, a service providing application 1211, a business API 1212, and a platform API 1213 are added to the structure illustrated in FIG. 6.

The business application 1210 is an application used by the business controller. The business API 1212 is provided to perform, for example, an issuance of the license, a cancellation of the license, a change of the license, or the like, which can be used from the business application 1210. The license administration server 1206 includes the business API 1212. The service providing application 1211 is an application used by the user such as the administrator. The platform API 1213 is provided to perform, for example, a reference of the license, a search of the license, a change of the license, or the like, which can be used from the service providing application 1211. The service providing apparatus 1208 includes the platform API 1213.

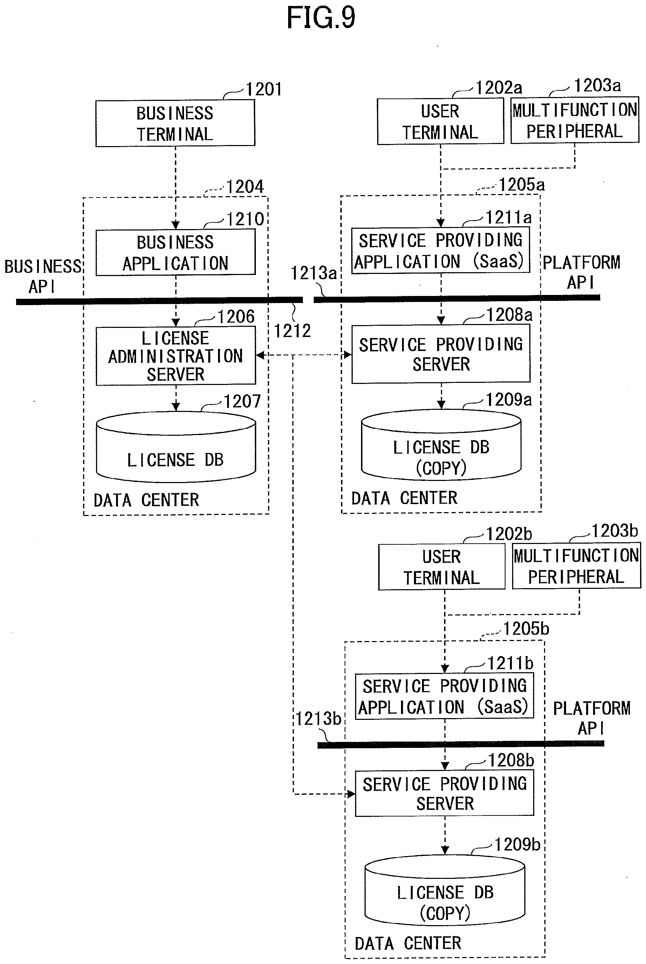

FIG. 9 illustrates a case where there are multiple locations of the data centers 1205. FIG. 9 explains an API used by the license administration apparatus of the business system and the service providing apparatus of the common service system. FIG. 9 illustrates a case where two locations of the data centers 1205a and 1205b exist.

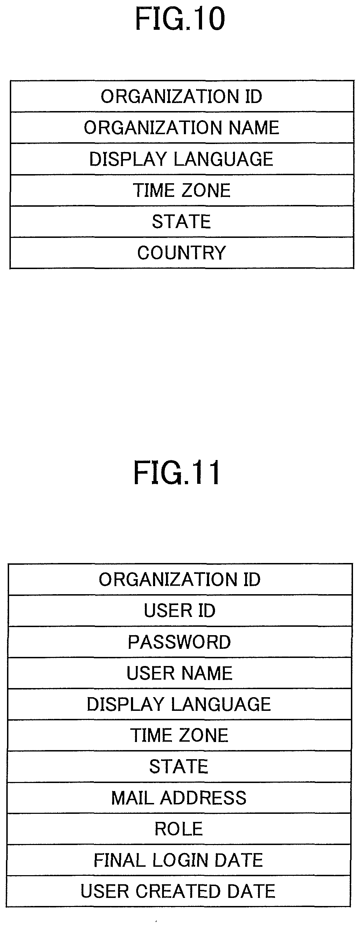

FIG. 10 is a structural view of exemplary organization information. The organization information illustrated in FIG. 10 includes an organization ID, an organization name, a display language, a time zone, a state, a country, and so on as data items.

The organization ID is information uniquely specifying groups such as companies, departments, or the like. The organization ID is not limited to a meaning of the organization and may be information for identifying, for example, a contract. The organization ID is uniquely determined. The organization name represents the name of the group such as the company or the department. The display language represents a language used for displaying the group name such as the company and the department.

Further, the display language represents a display for an access from the browser and a language used for a body text of mail. The time zone represents a standard time used by the group such as the company, the department, or the like. The state represents a state of the group such as the company or the department. The country represents the name of the country, to which the group such as the company or the department belongs.

FIG. 11 illustrates the structure of exemplary user information. The user information illustrated in FIG. 11 includes the organization ID, a user ID, a password, a user name, the display language, the time zone, the state, a mail address, a role, a final login date, a user created date, and so on.

The user ID and the password are information (user specifying information) for specifying the user. The user ID may be the user name or the like. The password is not indispensable. Although the user ID administered by the same organization ID is uniquely determined, the same user ID may be used in different organization IDs.

Further, identification information of an electronic medium (for example, an IC card) owned by the user may be used as the user ID. The electronic medium owned by the user may be an IC card, a mobile phone, a tablet terminal, an electronic book reader, or the like. Information identifying the electronic medium is a card ID, a serial ID, a telephone number of the portable phone, profile information of a terminal, or the like. It is possible to combine the information identifying the electronic medium in using the information identifying the electronic medium.

The user name represents the name of the user. The display language represents a language for displaying the user name. Further, the display language represents the display for the access from the browser and the language used for the body text of the mail. The time zone represents a standard time used by the user. The state represents the state of the user. The mail address is the address of an e-mail to the user. The role represents a user type such as an administrator, a user, or the like. The final login date represents a date when the user finally logged in. The user created date represents a date when the user is registered.

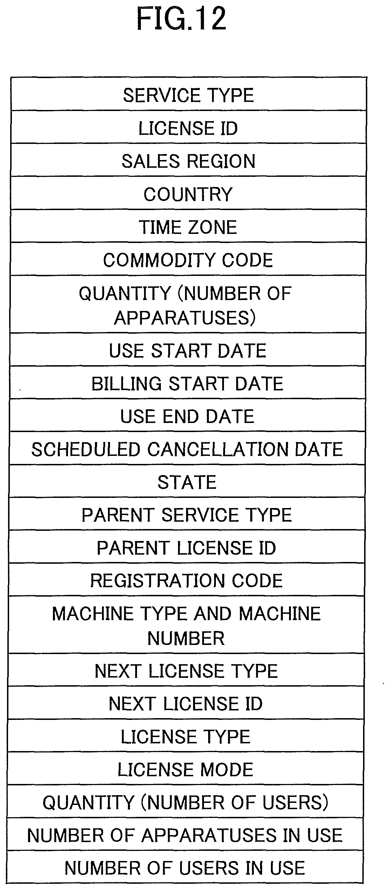

FIG. 12 illustrates a structure of exemplary license information. The license information illustrated in FIG. 12 includes data items such as a service type, a license ID, a sales region, the country, the time zone, a commodity code, a quantity (the number of the apparatuses), a use start date, a billing start date, a use end date, a scheduled cancellation date, a state, and so on. Further, the license information illustrated in FIG. 12 includes data items such as a parent service type, a parent license ID, a registration code, a machine type and machine number, a next license type, a next license ID, a license type, a license mode, a quantity (the number of users), the number of apparatuses in use, the number of users in use, and so on.

The service type is information for specifying the type of the service such as the portal service, the scan service, the print service, or the like. The license ID is identification information for identifying the license. The license ID becomes the organization ID in a case where the license is the organization license, and the service ID in a case where the license is the service license.

The sales region is information indicative of a region where the license is sold or the like. The country indicates the country name where the license is used. The time zone indicates a standard time of the country where the license is used. The commodity code is identification information for identifying a commodity corresponding to the license. The quantity (the number of apparatuses) is information indicative of the quantity (the number) of the apparatuses enabled to use the service by the license.

The use start date is information indicative of a date when the license becomes valid. The billing start date is information indicative of a date when billing is started and the same date as the use start date or later (for example, the first day of the next month). The use end date is information indicative of a license deadline on display. The use end date is, for example, one year after the billing start date. The scheduled cancellation date is information indicative of a date when the license is inactivated. The state is information indicative of a state of the license. The state of the license includes a provisonal registration indicative of a state before starting the use, a registration indicative of a state of now being used, a cancellation indicative of a state where the use is ended.

In a case of the service license, the organization is set to the parent service type. In the case of the service license, the organization ID is set to the parent license ID. In a case of the organization license, the registration code is set. The registration code is input at a time of opening the organization.

The machine type and machine number is set in the case of the service license. The machine type and the machine number is information specifying the apparatus as an object of the license. In case of a volume license where multiple apparatuses to be licensed exist, the machine type and machine number of the apparatus activated the earliest is set.

The next license type is set in a case of a renewed service license. The next service type has the same value as the service type. The next license ID is set in a case of the renewed service license. The next license ID is the service ID of the renewed service license.

The license type is information for specifying the type of the service license such as the apparatus license or the user license. The license type is information for setting the apparatus, the user, or the like, which are an object of limiting the use, by the service license. The license mode is information indicative of whether the use is permitted with the own service license in combination with the service license of another type or the use is permitted with only the own service license.

For example, the information such as "only the apparatus license" or "apparatus license + user license" is set to the license mode. In a case where the license mode is "only the apparatus license", the use of the service is permitted when the service license whose license type is "the apparatus license" is registered. In a case where the license mode is "the apparatus license + the user license", the use of the service is permitted when the service license whose license type is "the apparatus license" and the service license whose license type is "the user license" are registered.

The quantity (the number of users) is information indicative of the number of the users who can use the service by the license. The number of apparatuses which are being used is information indicative of the number of the apparatuses where the service can be used by the license. The number of users in use is information indicative of the number of the users who can use the service by the license. In the license information illustrated in FIG. 12, the quantity (the number of apparatuses) and the quantity (the number of users) are separately provided as the data items. However, the quantity (the number of apparatuses) and the quantity (the number of users) may be treated as the same data item.

Referring to the license information of FIG. 12, the organization license and the service license are in a relationship between a parent and the child. In the license information illustrated in FIG. 12, the organization license corresponds to a parent license and the service license corresponds to a child license. The organization license as the parent license is set to the parent license ID. In the license information illustrated in FIG. 12, although the relationship between the parent and the child is illustrated for the organization license and the service license, there may be a relationship among three hierarchies or more such as the parent, the child and a grandchild.

The organization license is necessary to use the service providing system 1100. Without the organization license, the organization cannot be opened in the service providing system 1100. By handling the organization license in the same data format as that of the service license, it becomes possible to bill the organization itself or provide a difference in a service level (a speed or a capacity) depending on the amount of the bill.

The service providing system 1100 provides a service to multiple organizations and provides a user administration independent for each organization. The service providing system 1100 performs an access limitation by preventing the data from being referred between the organizations. Therefore, it is necessary to open the organization before using all the services in the service providing system 1100. Because the relationship between the parent and the child of the licenses is formed by a very flexible data structure, it is possible to express a grouping of the licenses in the volume license or the like.

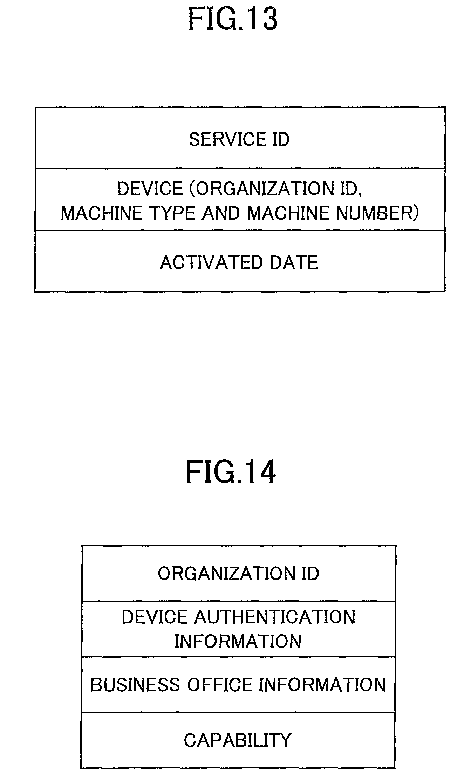

In a case of the volume license, the activated apparatus is administered by activated apparatus view information as illustrated in FIG. 13. FIG. 13 is a structural view of exemplary activated apparatus view information. The activated apparatus view information is stored in, for example, the license information memory unit 1144.

Referring to FIG. 13, the activated apparatus view information includes the service ID, the device (the organization ID and/or the machine type and machine number), an activated date, and so on, as the data item. The service ID is identification information for identifying the service license.

The device (the organization ID and/or the machine type and machine number) is information of the machine type and machine number of the apparatus activated using the service ID and information of the organization ID. The device (the organization ID and/or the machine type and machine number) can hold multiple pieces of information of the machine type and machine number of the apparatus activated using the service ID and multiple information of the organization ID. The activated date is the earliest date among dates when the activated apparatus is activated.

FIG. 14 illustrates a structure of exemplary apparatus information. Referring to FIG. 14, the apparatus information includes data items such as an organization ID, device authentication information, office information, capability and so on. The device authentication information is for device authentication, by which it is determined that the office apparatus is provided with specific conditions. The device authentication information may be an ID indicating that a specific application is installed in the office apparatus, a machine type number indicating that the machine is a specific office apparatus, or the like. The business office information represents a business office where the office apparatus is installed. For example, the capability represents a performance of the office apparatus.

### <Detailed process>

In a sequence chart described below, an actor (an icon in a human form) represents a client application (a browser) operated in each terminal operated by a user such as a business controller.

### <<Issuance of organization ID>>

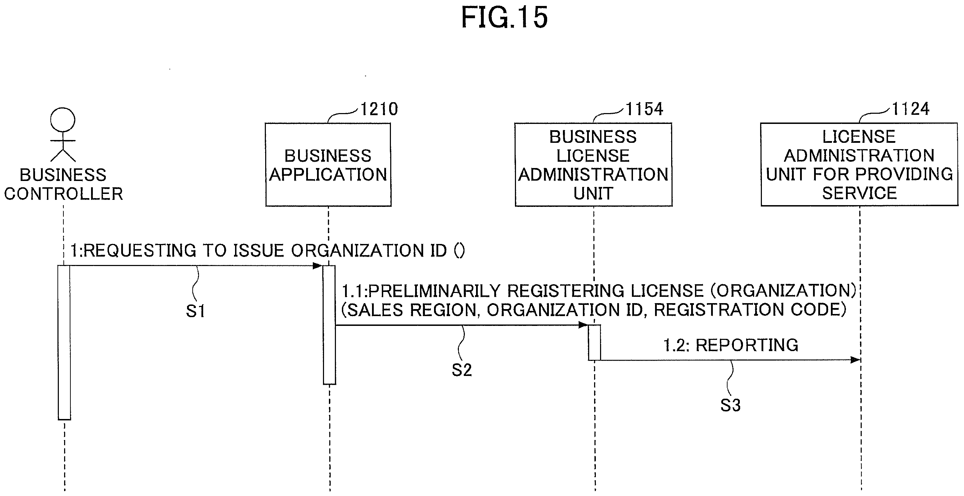

FIG. 15 is a sequence chart of an exemplary process of issuing an organization ID. The business controller operates the business terminal 1201 to cause an organization ID issuance screen to be displayed. The organization ID issuance screen is provided to make the business controller input information necessary for issuing the organization ID. The organization ID issuance screen illustrated includes a column designating a sales region where the business controller sells the license. For example, "Asia" or the like is designated as the sales region in the organization ID issuance screen.

The business controller operates the business terminal 1201 in step S1, designates the sales region for the business application 1201, and requests to issue the organization ID. The business application 1210 issues the organization ID and the registration code. The business application 1210 provisionally registers the sales region, the organization ID, and the registration code in the business license administration unit 1154 in step S2. In step S3, the business license administration unit 1154 reports the provisionally registered organization ID and provisionally registered registration code to the license administration unit 1124 for providing the service corresponding to the sales region. The license administration unit 1124 for providing the service corresponding to the sales region causes the reported organization ID and the reported registration code to be stored in the license information memory unit 1144.

After performing the processes illustrated in FIG. 15, the administrator purchases an organization license, which is a license for using the service poviding system 1100, from the distributer, and acquires the organization ID and the registration code from the distributer.

### <<Opening organization>>

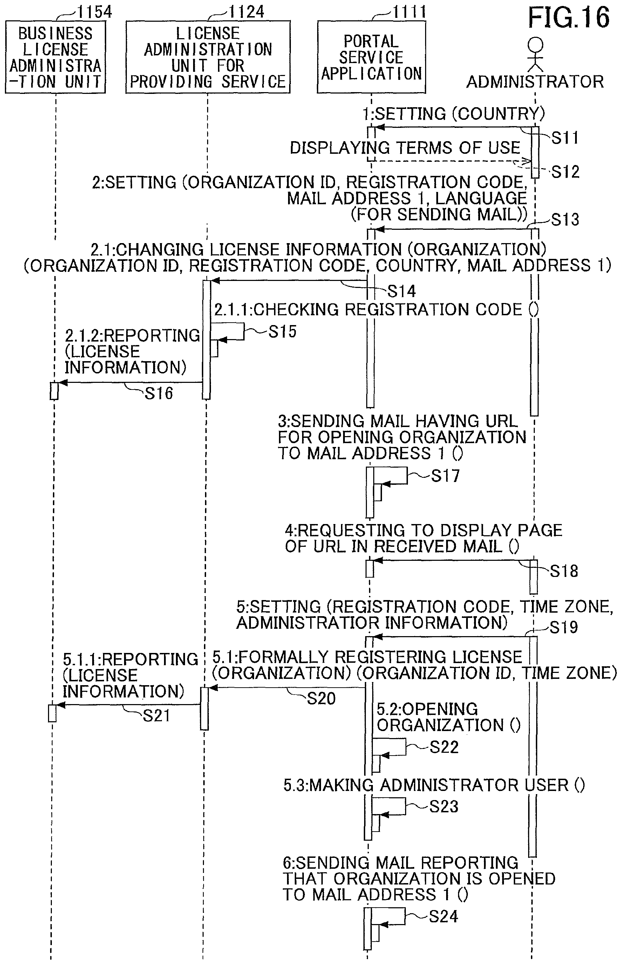

FIG. 16 is a sequence chart of an exemplary process of opening the organization. The administrator operates the user terminal 1202 and selects an URL of an organization opening screen by inputting or selecting from a bookmark so as to receive the organization opening screen from, for example, the portal service application 1111.

In step S11, the administrator operates the user terminal 1202 and sets the country to the organization opening screen. The country which can be set to the organization opening screen may be limited to, for example, a country associated to the sales region. In step S12, the portal service application 1111 displays a terms of use of the country set by the administrator onto a terms of use screen. For example, "Japan" is set as the country from the organization opening screen.

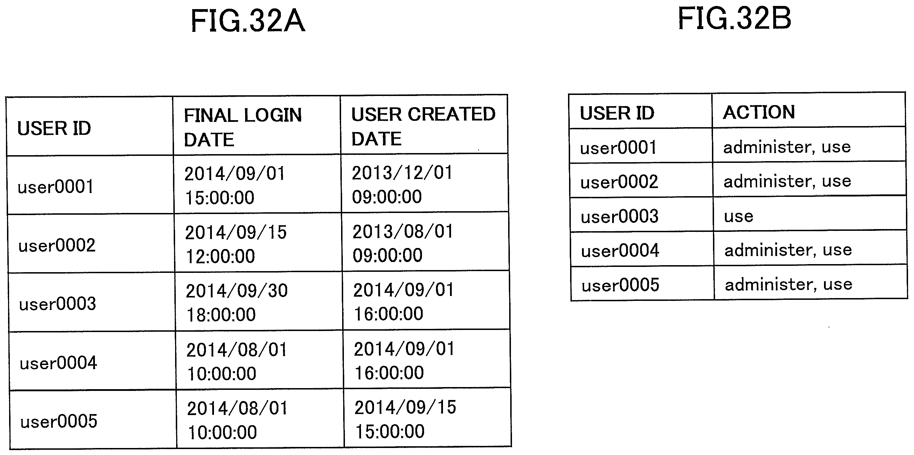

The administrator checks the terms of use, and thereafter operates the user terminal 1202 to cause a URL issuance screen as illustrated in FIG. 32 to be displayed. The administrator operates the user terminal 1202 and sets the organization ID acquired from the distributor, the registration code, the mail address, and a language of a return mail.

After the administrator sets the URL issuance screen, the administrator operates the user terminal 1202 to cause an input content checking screen to be displayed. After the administrator checks the input content in the URL issuance screen, the administrator pushes a send button on the input content checking screen. When the send button is pushed by the administrator, the portal service application 1111 receives the input contents input by the administrator in step S13.

The portal service application 1111 requests to change the license information of the organization license to the license administration unit 1124 for providing the service in step S14. The organization ID, the registration code, the country, and the mail address are included in the request of step S14.

In step S15, the license administration unit 1124 for providing the service checks whether the organization ID and the registration code which are included in the request of step S14 is stored in the license information memory unit 1144. In step S15, it is checked whether the registration code input by the administrator is correct.

When the organization ID and the registration code which are included in the request of step S14 are stored in the license information memory unit 1144, the license administration unit 1124 for providing the service reports the changed license information to the business license administration unit 1154 in step S16. The country and the mail address are added to license information reported in step S16. The business license administration unit 1154 changes the content of the license DB 1207 based on the license information reported in step S16. The success or the failure in changing the license information is reported to the portal service application 1111 through the license administration unit 1124 for providing the service from the business license administration unit 1154.

Meanwhile, the portal service application 1111 causes a URL report screen to be displayed on the user terminal 1202 when the send button is pushed. In the URL report screen, a message indicative of a send of a mail to the mail address set in the URL issuance screen illustrated in and a message of continuing the open of the organization by accessing the URL described in the mail are included.

In step S17, the portal service application 1111 sends the mail, in which the URL for opening the organization is written, to the mail address set in the URL issuance screen illustrated. When the mail address set in the URL issuance screen is not correct, the administrator cannot received the mail. Therefore, it is possible to prevent the mail address from being erroneously set.

In a case where the organization cannot be continuously opened by the error, the portal service application 1111 sends a mail including a message indicative of the failure of opening the organization to the mail address set in the URL issuance screen.

The error in opening the organization occurs in a case where the organization ID and the registration code which are included in the request in step S14 are not stored in the license information memory unit 1144 or are already used to open the organization, for example. The mail including the message indicative of the failure in opening the organization does not has a content enabling a malicious user to give a hint of the failure in opening the organization. Therefore, the mails have the same content.

In step S18, the administrator operates the user terminal 1202 and requests the portal service application 1111 to display a page of the URL for opening the organization described in the mail. The user terminal 1202 displays an organization information input screen.

The administrator operates the user terminal 1202 and sets the registration code acquired from the distributor, the organization information, and the administrator information (the user information). After the administrator sets the organization information input screen, the administrator operates the user terminal 1202 to cause the input content checking screen to be displayed. After the administrator checks the input content into the organization information input screen, the administrator pushes a registration button of the input content checking screen.

When the registration button is pushed by the administrator, the portal service application 1111 receives the input content input by the administrator in step S19. The portal service application 1111 requests to perform a formal registration of the license information of the organization license to the license administration unit 1124 for providing the service in step S20. The organization ID, the time zone, and so on are included in the request of step S20.

The license administration unit 1124 for providing the service reports the changed license information to the business license administration unit 1154 is step S21. The time zone and the use start date are included in the license information reported in step S21. The business license administration unit 1154 changes the content of the license DB 1207 based on the license information reported in step S21. The success or the failure in performing the formal registration of the license information is reported to the portal service application 1111 through the license administration unit 1124 for providing the service from the business license administration unit 1154.

In step S22, the portal service application 1111 requests the organization administration unit 1222 to cause the organization information to be stored in the organization information memory unit 1142 and makes a portal site of the organization so as to open the organization.

Further, in step S23, the portal service application 1111 requests the user administration unit 1123 to cause the user information of the administrator to be stored in the user information memory unit 1143. In step S24, the portal service application 1111 sends a mail indicating that the open of the organization is completed to the mail address set in the URL issuance screen.

Further, the portal service application 1111 causes the user terminal 1202 to display a screen reporting the result of the open. The screen reporting the result of the open includes a message indicating that the mail reporting the result of the open to the mail address set in the URL issuance screen.

### <<Issuance of service ID>>

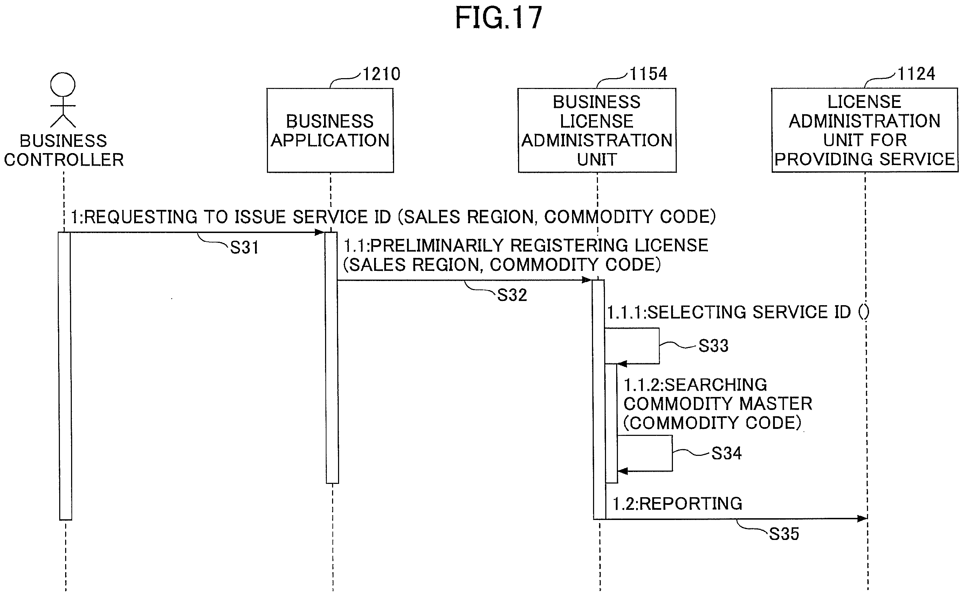

FIG. 17 is a sequence chart of an exemplary process of issuing a service ID. The business controller operates the business terminal 1201 to cause a service ID issuance screen (not illustrated) to be displayed. The service ID issuance screen is provided to make the business controller input information necessary for issuing the service ID. The business controller designates a sales region where the license is sold on the service ID issuance screen.

In step S31, the business controller operates the business terminal 1201, selects the sales region and the commodity code, and requests the business application 1210 to issue the service ID. The business application 1210 designates the sales region and the commodity code in step S32 and provisionally registers the license in the business license administration unit 1154. In step S33, the business license administration unit 1154 selects the service ID. The business license administration unit 1154 causes the license DB 1207 to store the selected service ID 1207. Further, in step S34, the business license administration unit 1154 searches a commodity master using a commodity code and causes the license DB 1207 to store the service type, the sales region, the commodity code, and the quantity. For example, different commodity codes may be attached depending on combinations of the service type and the quantity. With this, by using the commodity codes, the business controller can request to issue the service ID designating the number of apparatuses enabled to use the service or the number of users enabled to use the service.

In step S35, the business license administration unit 1154 reports the license information including the selected service ID to the license administration unit 1124 for providing the service corresponding to the sales region. The license administration unit 1124 for providing the service corresponding to the sales region causes the reported service ID to be stored in the license information memory unit 1144.

After the processes illustrated in FIG. 17, the administrator purchases the service license being a license for using the service such as the scan service application 1112 or the like from the distributor and acquires the service ID from the distributor.

### <<Registration of apparatus license>>

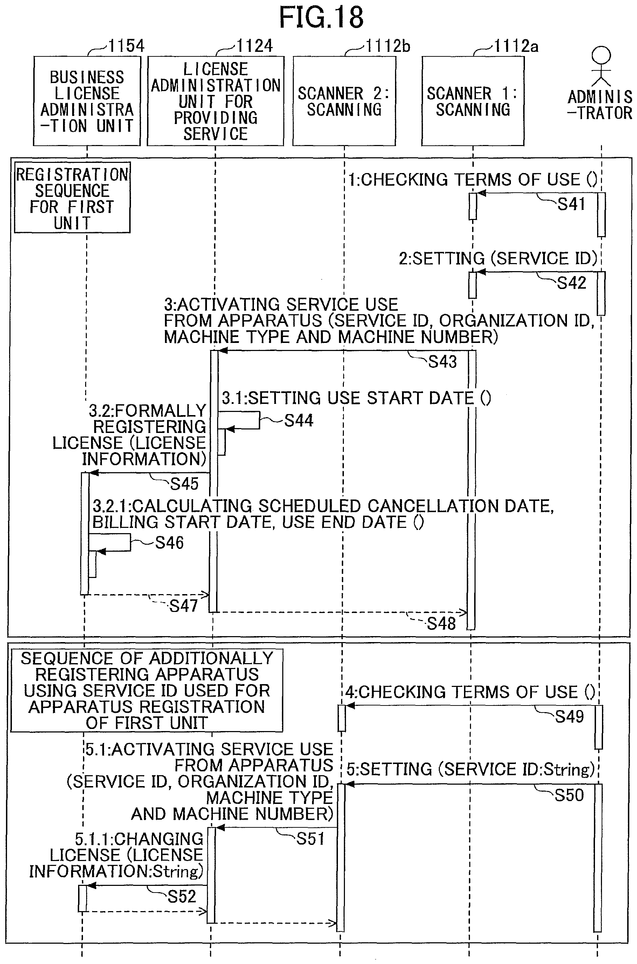

FIG. 18 is a sequence chart of an exemplary process of registering the apparatus license. Referring to FIG. 18, after registering the service ID in a first MFP 1203a, the service ID is registered in a second MFP 1203b using the same service ID as the service ID for the first MFP 1203a.

In step S41, the administrator operates the MFP 1203a and checks the terms of use displayed on the screen. Thereafter, for example, the service registration screen illustrated in is displayed. The service registration screen is substantialized by a WebUI provided by an SDK application operated in, for example, the MFP 1203a. In step S42, the administrator inputs the service ID from the service registration screen. Hereinafter, described is an example where the administrator performs the service registration.

The administrator operates the MFP 1203a to set the service ID acquired from the distributer in the service registration screen. In step S43, the scan service application 1112a requests the license administration unit 1124 for providing the service corresponding to the sales region to perform the formal registration of the license information of the service license. For example, the service ID, the organization ID, the machine type and machine number of the MFP 1203a, and so on are included in the request in step S43.

In step S44, the license administration unit 1124 for providing the service specifies the license information stored in the license information memory unit 1144 based on the service ID included in the request of step S43. The license administration unit 1124 for providing the service sets the organization ID and the machine type and machine number of the MFP 1203a to the specified license information.

In step S44, the service ID to be registered, the organization ID of the organization to which the administrator belongs, and the machine type and machine number of the MFP 1203a are associated and stored. The license administration unit 1124 for providing the service sets the current date as the above-described use start date to the specified license information.

In step S45, the license administration unit 1124 for providing the service requests the business license administration unit 1154 to perform the formal registration of the license information of the service license in step S45. In step S46, the business license administration unit 1154 calculates the scheduled cancellation date, the billing start date, and the use end date based on the use start date.

In step S47, the business license administration unit 1154 returns the scheduled cancellation date, the billing start date, and the use end date, which were calculated, to the license administration unit for providing service 1124. The license administration unit 1124 for providing the service stores the scheduled cancellation date, the billing start date, and the use end date to the license DB 1209.

In step S48, the success and failure of the registration of the service ID are reported from the license administration unit 1124 for providing the service to the scan service application 1112. In a case where the registration of the service ID fails, the scan service application 1112 displays the failure of the registration of the service ID on the MFP 1203a. The error case where the registration of the service ID fails is that the service ID set in step S42 is not stored in the license information memory unit 1144 or already used for the registration of the service ID.

After registering the service ID in the first MFP 1203a, in step S49, the administrator operates the MFP 1203b, checks the terms of use displayed on the screen, and causes the service registration screen to be displayed. In step S50, the administrator sets the service ID registered in the first MFP 1203a in the service registration screen and selects the service registration, and pushes the "next" button.

When the "next" button is pushed by the administrator, the process goes to step S51. Then, the scan service application 1112b requests the license administration unit 1124 for providing the service corresponding to the sales region to perform the formal registration of the license information of the service license. For example, the service ID, the organization ID, the machine type and machine number of the MFP 1203a, and so on are included in the request in step S51.

If the service ID is registered in the MFP 1203a and the MFP 1203a is to register a service ID of the same service type, the license administration unit for providing service 1124 reports the error.

After the license administration unit 1124 for providing the service receives the request of step S51, the license administration unit 1124 for providing the service specifies the license information stored in the license information memory unit 1144 based on the service ID included in the request of step S51. The license administration unit 1124 for providing the service checks whether the use start date is set to the specified license information.

Here, because described is a case where the registered service ID is set to the first MFP 1203a, the use start date is set to the specified license information. In a case where the use start date is set to the specified license information, the license administration unit for providing service 1124 determines that the specified license information 1124 is started to be used.

The license administration unit 1124 for providing the service checks the quantity (the number of apparatuses) of the specified license information and the number of apparatuses using the license and determines whether another apparatus can be registered. The number of apparatuses using the license corresponding to the specified license information reaches the quantity (the number of apparatuses) of the specified license information, the license administration unit 1124 for providing the service determines that the additional registration is not possible and reports it as the error. Said differently, the license administration unit 1124 for providing the service adjusts the number of the apparatuses using the license so as not to exceed the quantity (the number of apparatuses) of the specified license information.

The number of apparatuses using the license corresponding to the specified license information does not reach the quantity (the number of apparatuses) of the specified license information, the license administration unit 1124 for providing the service determines that the additional registration is possible. When the license administration unit 1124 for providing the service determines that the additional registration is possible, the license administration unit 1124 for providing the service adds 1 to the number of apparatuses using the license. Further, the license administration unit 1124 for providing the service adds the organization ID and the machine type and machine number, which are included in the request of step S51, to the device (the organization ID and the machine type and machine number) of the activated apparatus view information illustrated in FIG. 13.

In step S52, the license administration unit 1124 for providing the service requests the business license administration unit 1154 to change the license information of the service license. The business license administration unit 1154 renews the license information and the activated apparatus view information based on the machine type and machine number included in the request of step S52.

When the failure of the registration of the service ID is displayed in the MFP 1203a and the MFP 1203b, a content enabling the error case to be distinguishable is not included to prevent a hint from being provided to a malicious user and has the same content as those of the other error cases.

Referring to the sequence chart illustrated in FIG. 18, by inputting the service ID from the UIs of the scan service applications 1112a and 1112b operated in the MFP 1203a and the MFP 1203b, it is possible to store the service ID and the machine type and machine number of the MFP 1203 while associating the service ID with the machine type and machine number of the MFP 1203a and the MFP 1203b.

Further, referring to the sequence chart illustrated in FIG. 18, the same service ID can be registered in the multiple apparatuses using a volume license.

### <<Registration of user volume license>>

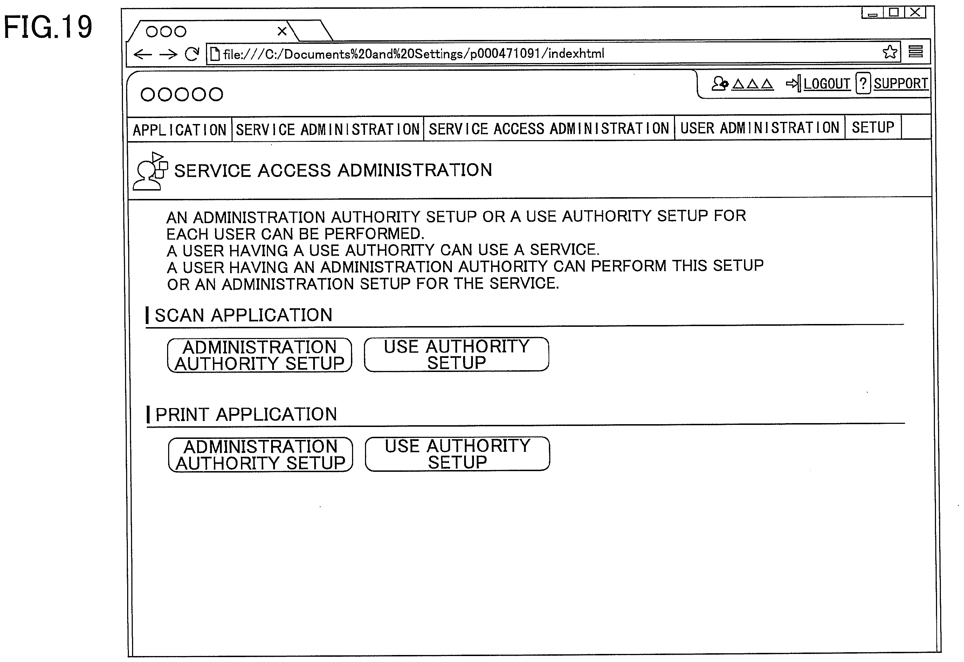

The administrator operates the user terminal 1202 to cause the service access administration screen illustrated in FIG. 19 to be displayed. FIG. 19 is an image chart of an exemplary service access administration screen. The service access administration screen illustrated in FIG. 19 sets a user to whom an authority of the administration or the use is given for each service type. The administrator can select the scan service application 1112 and the print service application 1113 as the service type, for which the administration authority setup or the use authority is set, from the service access administration screen illustrated in FIG. 19.

For example, when the administration authority setup of the scan service application 1112 is selected from the service access administration screen illustrated in FIG. 19, the administrator can cause an administration authority setup screen of the scan service application 1112 to be displayed. For example, when the use authority setup of the scan service application 1112 is selected from the service access administration screen illustrated in FIG. 19, the administrator can cause a use authority setup screen of the scan service application 1112 to be displayed. For example, when the administration authority setup of the print service application 1113 is selected from the service access administration screen illustrated in FIG. 19, the administrator can cause an administration authority setup screen of the print service application 1113 to be displayed. For example, when the use authority setup of the print service application 1113 is selected from the service access administration screen illustrated in FIG. 19, the administrator can cause a use authority setup screen of the print service application 1113 to be displayed.

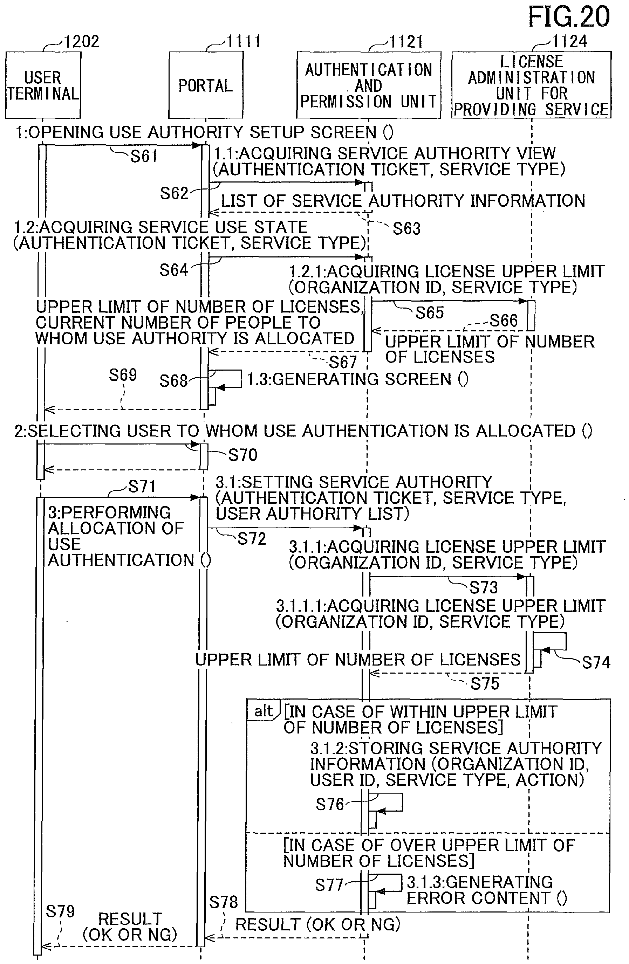

Described below is processing of the sequence chart illustrated in FIG. 20 in a case where the use authority setup of the scan service application 1112 is selected by the administrator. FIG. 20 is a sequence chart of an exemplary process of setting the user to whom the use authority is given for each service type.

In step S61, the administrator operates the user terminal 1202 and selects the use authority setup of the scan service application 1112 from the service access administration screen illustrated in FIG. 19. The user terminal 1202 performs a request to open the use authority setup screen of the scan service application 1112 to the portal service application 1111.

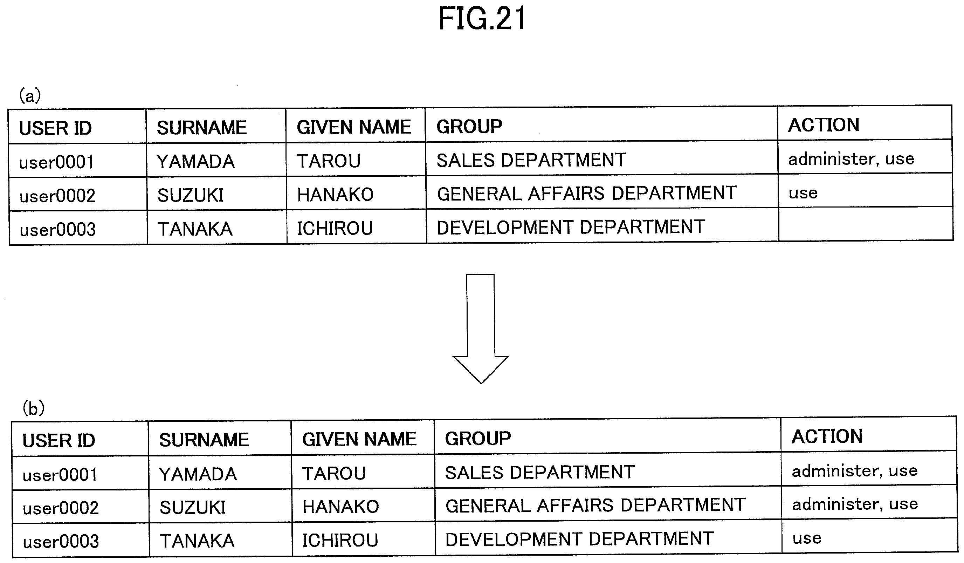

In step S62, the portal service application 1111 designates the "scan service application" as the service type and requests the authentication and permission unit 1121 to send a service authority view. In step S63, the portal service application 1111 acquires a list of the service authority information illustrated in, for example, (a) of FIG. 21 from the authentication and permission unit 1121.

FIG. 21 illustrates a structure of an exemplary list of the service authority information. FIG. 21 illustrates lists of the service authority information before and after the administration authority setup and the use authority setup. FIG. 21 illustrates at (a) the list of the service authority information before the administration authority setup and the use authority setup. FIG. 21 illustrates at (b) the list of the service authority information after the administration authority setup and the use authority setup.

The service authority information illustrated in FIG. 21 includes a user ID, a surname, a given name, a group, and an action as data items. The surname, the given name, and the group are an example of a user attribute other than the user ID. The action held by the service authority information indicates the authority for each service type given to the user. The action of "administer" indicates the administration authority. The action of "use" indicates the use authority.

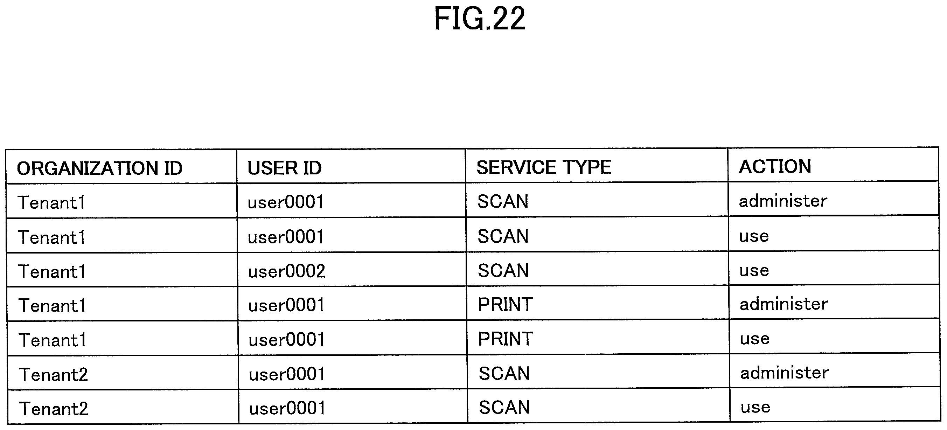

The authentication and permission unit 1121 can generates the service authority information illustrated in FIG. 21 from service permission information stored in the service permission table illustrated in, for example, FIG. 22.FIG. 22 illustrates an exemplary structure of the service permission table. The service permission information includes an organization ID, a user ID, a service type, and an action, as data items. The authentication and permission unit 1121 administers the service permission information illustrated in FIG. 22 so as to set the use authority or the administration authority for each service type.

In step S64, the portal service application 1111 designates the "scan service application" as the service type and requests the authentication and permission unit 1121 to send a service use situation. In step S65, the authentication and permission unit 1121 requests the license administration unit 1124 for providing the service to send the upper limit of the number of the licenses by designating the organization ID and the service type. In step S66, the authentication and permission unit 1121 acquires the upper limit of the number of the licenses from the license administration unit for providing service 1124.

In step S67, the authentication and permission unit 1121 reports the upper limit of the number of the licenses and a current number of people to whom the use authority is allocated, as a response to the request for the service use situation, to the portal service application 1111.

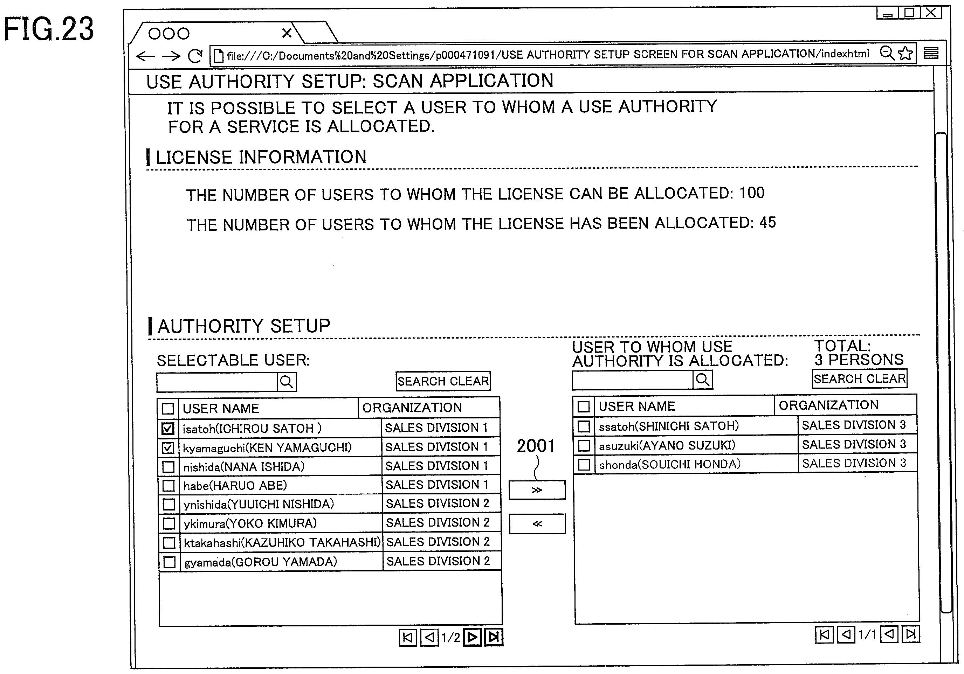

In step S68, the portal service application 1111 generates the use authority setup screen of the scan service application 1112 illustrated in FIG. 23. FIG. 23 illustrates an image of an exemplary use authority setup screen of the scan service application. The use authority setup screen of the scan service application 1112 illustrated in FIG. 23 displays the number of users to whom the license can be allocated and the number of users to whom the license has been allocated. Further, on the use authority setup screen of the scan service application 1112, a view of the users to whom the use authority is not allocated and a view of the users to whom the use authority is allocated are displayed a column for an authority setup.

On the use authority setup screen of the scan service application 1112 illustrated in FIG. 23, "100" is displayed as the number of users to whom the license can be allocated based on the upper limit of the number of the licenses, and "45" is displayed as the number of users to whom the license has been allocated based on the current number of people to whom the use authority is allocated.

In step S69, the portal service application 1111 causes the user terminal 1202 to display the use authority setup screen of the scan service application 1112 illustrated in FIG. 23. In step S70, the administrator operates the user terminal 1202 to select the user, to whom the use authority is to be allocated, from the view of the users, to whom the use authority is not allocated, where the view is included in the use authority setup screen of the scan service application 1112 illustrated in FIG. 23.

In step S71, the administrator operates the user terminal 1202 to perform an allocation of the use authentication to the selected user by pushing a button 2001 provided on the use authority setup screen of the scan service application 1112.

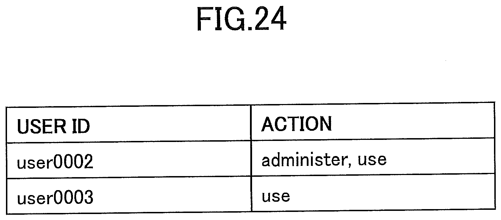

In step S72, the portal service application 1111 requests the authentication and permission unit 1121 to perform a use authority setup by designating the service type and the user authority list. The user authority list is configured like FIG. 24.

FIG. 24 illustrates an exemplary structure of the user authority list. As illustrated in FIG. 24, the user authority list represents a view of the authority to be allocated to the user specified by the user ID.

In step S73, the authentication and permission unit 1121 requests the license administration unit 1124 for providing the service to send the upper limit of the number of the licenses by designating the organization ID and the service type. In step S74, the license administration unit 1124 for providing the service acquires the upper limit of the number of the licenses by adding the number of the activated licenses including a combination of the organization ID and the service type designated by the authentication and permission unit 1121. In step S75, the license administration unit 1124 for providing the service returns the upper limit of the number of the licenses to the authentication and permission unit 1121.

After the authentication and permission unit 1121 acquires the upper limit of the number of the licenses from the license administration unit 1124 for providing the service, the authentication and permission unit 1121 performs the process of step S76 when the use authority is allocated based on the current request of the use authority setup as many as the upper limit of the number of the licenses or smaller. The authentication and permission unit 1121 renews the action of the service authority information illustrated in FIG. 21 in step S76 based on the request for a current use authority setup. Further, the authentication and permission unit 1121 adds service permission information based on a request for the current use authority setup to the service permission table illustrated in FIG. 22.

The authentication and permission unit 1121 performs a process of step S77 if the number of the licenses is not the upper limit of the number of the licenses or smaller after allocating the use authority based on the request for the current use authority setup. Then, because the use authority cannot be allocated in response to the request for the current use authority setup, the authentication and permission unit 1121 generates an error content.

A result in response to the request for the use authority setup in step S72 is returned from the authentication and permission unit 1121 through the portal service application 1111 to the user terminal 1202 in steps S78 and S79. A result in response to the request for the use authority setup includes OK indicative of the success of the allocation of the use authority and NG indicative of the failure of the allocation of the use authority.

According to the process of the sequence chart illustrated in FIG. 20, because the user to whom the administration authority or the use authority is allocated can be individually set, the license can be easily administered. Further, according to the process of the sequence chart illustrated in FIG. 20, when multiple user licenses or a user volume license is applied to one organization, handling can be collectively performed. Therefore, a cumbersome work can become easy.

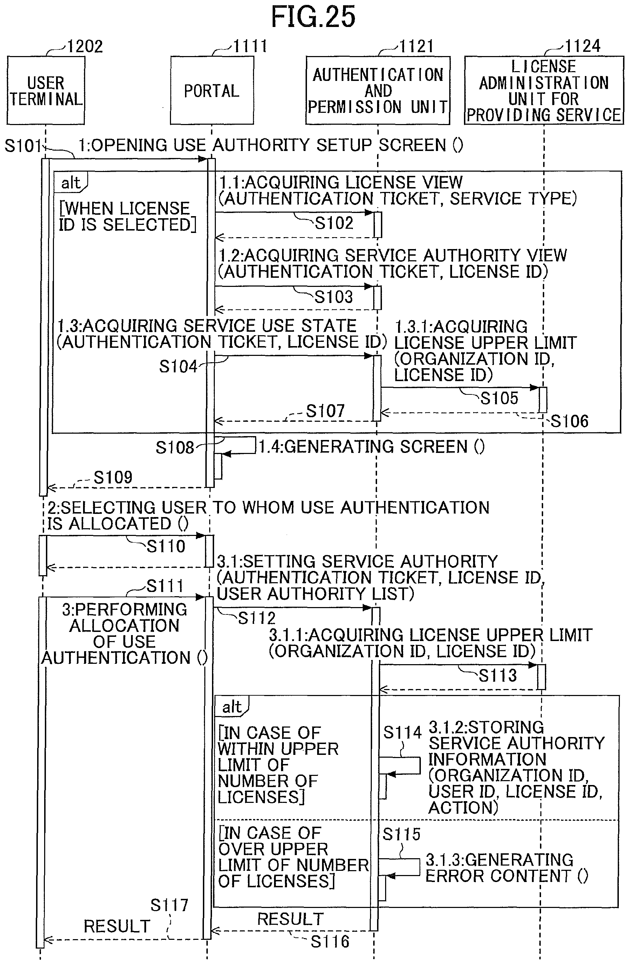

Referring to FIG. 20, a process of giving the use authority for each service has been described. In a case where the use authority setup of the scan service application 1112 is selected by the administrator, the process of a sequence chart illustrated in FIG. 25 can be performed in place of the sequence chart illustrated in FIG. 20. FIG. 25 is a sequence chart of an exemplary process of setting the user to whom the use authority is given for each license.

In step S101, the administrator operates the user terminal 1202 and selects the use authority setup of the scan service application 1112 from the service access administration screen illustrated in FIG. 19. The user terminal 1202 performs a request to open the use authority setup screen of the scan service application 1112 to the portal service application 1111.

In step S102, the portal service application 1111 requests the authentication and permission unit 1121 to send a license view by designating the service type and acquires the license view corresponding to the service type.

In step S103, the portal service application 1111 designates the license ID and requests the authentication and permission unit 1121 to send a service authority view. The license ID designated here is the license ID at the uppermost position in, for example, the license view when the use authority setup screen of the scan service application 1112 is first opened. When the administrator selects the license ID from the use authority setup screen of the scan service application 1112, the license ID selected by the administrator is designated.

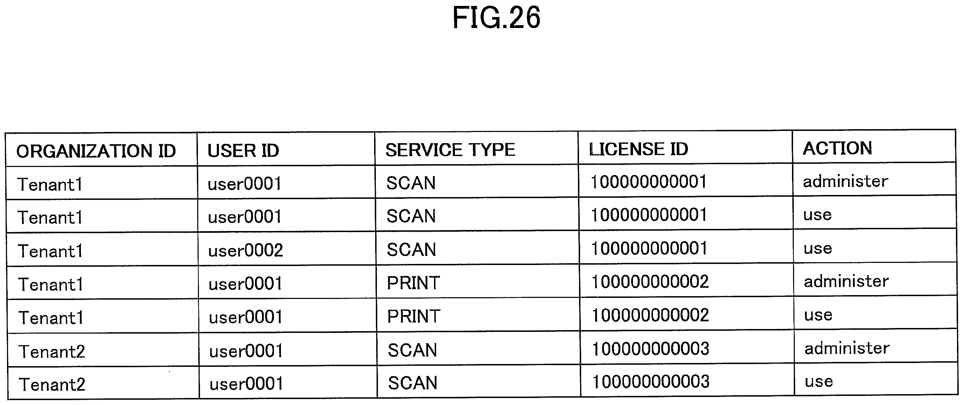

The authentication and permission unit 1121 provides a list of the service authority information illustrated in (a) of FIG. 21 generated from the service permission information illustrated in FIG. 26 to the portal service application 1111.

FIG. 26 illustrates another exemplary structure of the service permission table. The service permission information illustrated in FIG. 26 has a structure of adding the license ID to the data item of FIG. 22. The authentication and permission unit 1121 administers the service permission information illustrated in FIG. 26 so as to set the user to whom the use authority or the administration authority is given. For example, the service permission table illustrated in FIG. 26 indicates that the use authority and the administration authority of the scan service application 1112 are given to the user whose user ID is "user0001" using the license ID "100000000001".

The service permission table illustrated in FIG. 26 indicates that the use authority of the scan service application 1112 is given to the user whose user ID is "user0002" using the license ID "100000000001". The authentication and permission unit 1121 can provide a list of the service authority information in response to the service authority view designating the license ID by using the service permission table of FIG. 26.

In step S104, the portal service application 1111 requests the authentication and permission unit 1121 to send a service use situation by designating the license ID. In step S105, the authentication and permission unit 1121 requests the license administration unit 1124 for providing the service to send the upper limit of the number of the licenses by designating the organization ID and the license ID.

In step S106, the authentication and permission unit 1121 acquires the upper limit of the number of the licenses from the license administration unit for providing service 1124. In step S107, the authentication and permission unit 1121 reports the upper limit of the number of the licenses and the current number of people to whom the use authority is allocated, as a response to the request for the service use situation, to the portal service application 1111.

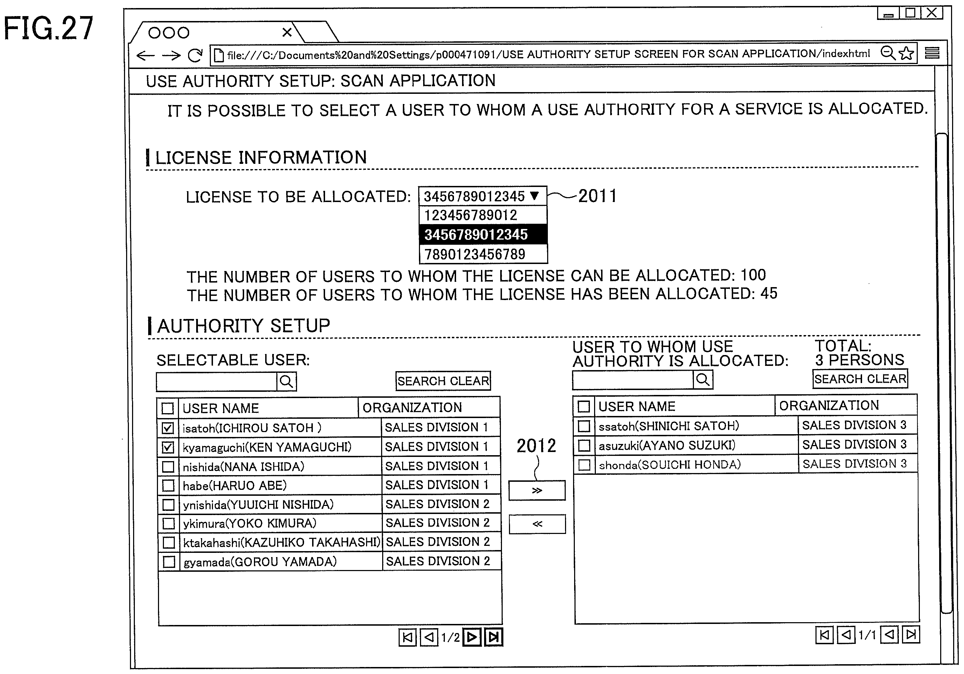

In step S108, the portal service application 1111 generates the use authority setup screen of the scan service application 1112 illustrated in FIG. 27. FIG. 27 illustrates an image of an exemplary use authority setup screen of the scan service application.

The use authority setup screen of the scan service application illustrated in FIG. 27 displays a license ID selection column 2011 to be allocated, the number of users to whom the license can be allocated, and the number of users to whom the license has been allocated, as the license information. Further, an authority setup column of the use authority setup screen of the scan service application 1112 displays a view of the users to whom the use authority is not allocated and a view of the users to whom the use authority is allocated.

On the use authority setup screen of the scan service application 1112 illustrated in FIG. 27, based on the upper limit of the number of the licenses of the selected license ID, "100" is displayed as the number of users to whom the license can be allocated and "45" is displayed as the number of users to whom the license has been allocated based on the current number of people to whom use authority is allocated.

In step S109, the portal service application 1111 causes the user terminal 1202 to display the use authority setup screen of the scan service application 1112 illustrated in FIG. 27. In step S110, the administrator operates the user terminal 1202 to select the user, to whom the use authority is to be allocated, from the view of the users, to whom the use authority is not allocated, where the view is included in the use authority setup screen of the scan service application 1112 illustrated in FIG. 27.

In step Sill, the administrator operates the user terminal 1202 to perform an allocation of the use authentication to the selected user by pushing the button 2012 provided on the use authority setup screen of the scan service application 1112.

In step S112, the portal service application 1111 requests the authentication and permission unit 1121 to perform a use authority setup by designating the license ID and the user authority list. The user authority list is configured like FIG. 24.

In step S113, the authentication and permission unit 1121 requests the license administration unit 1124 for providing the service to send the upper limit of the number of the licenses by designating the organization ID and the license ID, and acquires the upper limit of the number of the licenses.

After the authentication and permission unit 1121 acquires the upper limit of the number of the licenses from the license administration unit 1124 for providing the service, the authentication and permission unit 1121 performs the process of step S114 when the use authority is allocated based on the current request of the use authority setup as many as the upper limit of the number of the licenses or smaller. The authentication and permission unit 1121 renews the action of the service authority information illustrated in FIG. 21 in step S114 based on the request for the current use authority setup.

The authentication and permission unit 1121 performs a process of step S115 if the number of the licenses is not the upper limit of the number of the licenses or smaller after allocating the use authority based on the request for the current use authority setup. Then, because the use authority cannot be allocated in response to the request for the current use authority setup, the authentication and permission unit 1121 generates the error content.

A result in response to the request for the use authority setup in step S112 is returned from the authentication and permission unit 1121 through the portal service application 1111 to the user terminal 1202 in steps S116 and S117. A result in response to the request for the use authority setup includes OK indicative of the success of the allocation of the use authority and NG indicative of the failure of the allocation of the use authority.

According to the process of the sequence chart illustrated in FIG. 25, the user to whom the administration authority or the use authority is given for each license ID can be individually set. Therefore, the administration authority or the use authority can be set for each user in conformity with, for example, a license deadline. Further, according to the process of the sequence chart of FIG. 25, it is possible to collectively allocate the authority and the user volume license by one allocating operation. Therefore, a cumbersome work in the license administration can become easy.

### <<Renewal of contracted service>>

The administrator operates the user terminal 1202 to access the portal service application 1111. Then, the service administration screen is received from the portal service application 1111. The service license of the organization, to which the administrator logging in the portal service application 1111 belongs, is displayed on the service administration screen. The service license of the organization, to which the administrator belongs, can be searched using a parent license ID of the license information illustrated in FIG. 12.

Further, the service license of the organization, to which the administrator logging in the portal service application 1111 belongs, can be searched using the machine type and machine number of the license information or the machine type and machine number of the apparatus view information associated with the license information and activated. The state of the service license on the service administration screen can be displayed by distinguishing "now being used (not renewed)" and "now being used (renewed)" from "now being used" depending on whether a new license ID is registered. The administrator operates the user terminal 1202 to cause the service registration screen to be displayed from the service administration screen. Thus, a renewal of the contracted service can be started.

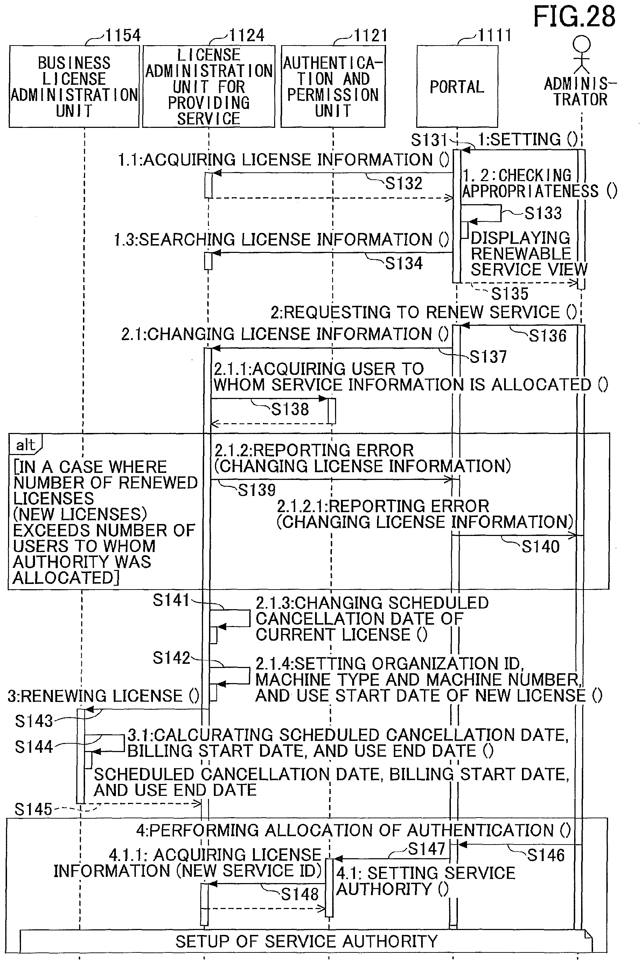

FIG. 28 is a sequence chart of an exemplary process of renewing the contracted service. The contracted service to be renewed in the sequence chart illustrated in FIG. 28 is a service license whose state is "now being used (not renewed)".

In step S131, the administrator operates the user terminal 1202 to set the license ID (a new license ID) used to renew on the service registration screen. In step S132, the portal service application 1111 acquires the license information, in which the license ID is set as a new service ID set in the service registration screen, from the license administration unit 1124 for providing the service.

In step S113, the portal service application 1111 checks an appropriateness of the new license ID set in step S131 using a result of acquiring the license information in step S132. When the new license ID is not correctly input, the portal service application 1111 displays a message indicating that the input is not correct. An error case where the input of the new license ID is not correct occurs when the new license ID is not stored in the license information memory unit 1144 or is already used, for example. The message indicating that the input of the new license ID is not correct does not has a content enabling a malicious user to give a hint of distinguishing the error case. Therefore, the messages have the same content.

When the new license ID set in step S133 is appropriate, the portal service application 1111 displays a screen of the terms of use. After the administrator checks the terms of use, the portal service application 1111 searches license information having the same parent ID and the same service type as those of the license information acquired in step S132.

In step S135, the portal service application 1111 displays a renewable service license out of the license information searched in step S134. Said differently, the portal service application 1111 displays a view of the service license whose state is now being used (renewed).

In step S136, the operator operates the user terminal 1202 so as to select the license ID to be renewed and to request the portal service application 1111 to renew the service. The request of step S136 includes the license ID to be renewed (the current license ID) and the license ID used for the renewal (the new license ID). The portal service application 1111 requests the license administration unit 1124 for providing the service to change the license information in step S137. The request of step S137 includes the current license ID and the new license ID.

In step S138, the license administration unit 1124 for providing the service designates the current license ID and acquires the number of people, to whom the use authority of the current license ID is allocated, from the authentication and permission unit 1121. When the number of people, to whom the use authority of the current license ID, is allocated exceeds the upper limit of the number of the licenses of the new license ID, the license administration unit 1124 for providing the service performs the process of step S139.

In step S139, the license administration unit for providing service 1124 determines that the number of the licenses exceeds the upper limit of the number of the licenses and reports an error to the portal service application 1111 at every time when the current license ID switches over to the new license ID. In step S140, the administrator can recognize an excess of the number of the licenses over the upper limit of the number of the licenses occurring at a time of switching from the current license ID to the new license ID in receipt of the error reported from the portal service application 1111. Therefore, the administrator can recognize necessity of changing the new license ID selected in step S136.

If the number of people to whom the use authority of the current license ID is allocated does not exceed the upper limit of the number of the licenses, the license administration unit 1124 for providing the service performs a process of step S141.

In step S141, the license administration unit 1124 for providing the service changes the scheduled cancellation date of the license information (the current license) whose license ID is set as the current service ID to be the same date as the use end date. Further, the license administration unit 1124 for providing the service sets the new service ID to a next license ID next to the current license ID.

In step S142, the license administration unit 1124 for providing the service sets the organization ID of the license information (the new license) in which the new license ID is set as the license ID, the machine type and machine number, and the current date as the use start date based on the current license. In step S143, the license administration unit 1124 for providing the service requests the business license administration unit 1154 to renew the license information of the service license.

In step S144, the business license administration unit 1154 calculates the scheduled cancellation date, the billing start date, and the use end date based on the use start date. In step S145, the business license administration unit 1154 returns the scheduled cancellation date, the billing start date, and the use end date, which were calculated, to the license administration unit 1124 for providing the service. The license administration unit 1124 for providing the service stores the scheduled cancellation date, the billing start date, and the use end date to the license DB 1209.

The end of the renewal of the contracted service can be reported from the license administration unit 1124 for providing the service to the portal service application 1111. After the renewal of the contracted service ends, the portal service application 1111 causes the user terminal 1202 to display a license renewal end screen.

In step S146, the administrator operates the user terminal 1202 and requests the use authority to be allocated to the selected user by operating the user terminal 1202 in a manner similar to step Sill illustrated in FIG. 25. In step S147, the portal service application 1111 requests the authentication and permission unit 1121 to perform a use authority setup by designating the new license ID and the user authority list in a manner similar to step S112 illustrated in FIG. 25.

In step S148, the authentication and permission unit 1121 requests the license administration unit 1124 for providing the service to send the upper limit of the number of the licenses by designating the organization ID and the license ID, and acquires the upper limit of the number of the licenses.

After the authentication and permission unit 1121 acquires the upper limit of the number of the licenses from the license administration unit 1124 for providing the service, the authentication and permission unit 1121 performs the process similar to step S114 when the use authority is allocated based on the current request of the use authority setup because the number of the licenses is the upper limit of the number of the licenses or smaller. The authentication and permission unit 1121 renews the action of the service authority information illustrated in, for example, FIG. 21 based on the request for the current use authority setup.

By the process of the sequence chart illustrated in FIG. 28, it is possible to determine the number of users to whom the license can be allocated based on the upper limit of the number of the licenses of the new license ID in a case where the current license is renewed to the new license. Therefore, by the process of the sequence chart illustrated in FIG. 28, it is possible to prevent the number of people to whom the use authority of the license ID is allocated from exceeding the upper limit of the number of the licenses when the current license is renewed to the new license.

### <<Cancellation of service>>

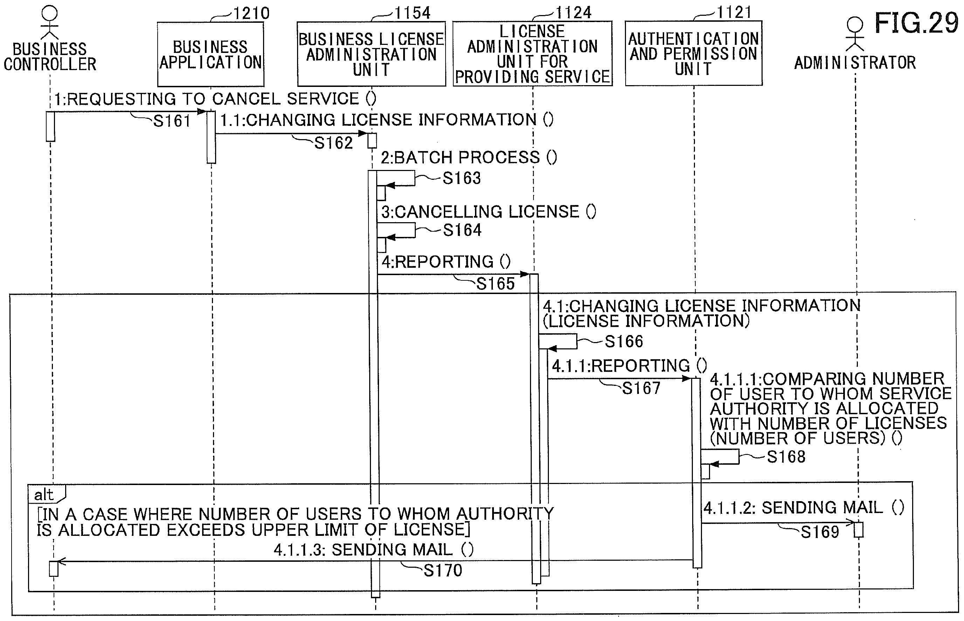

FIG. 29 is a sequence chart of an exemplary process of cancelling the service. The business controller operates the business terminal 1201 in step S161, and requests the business application 1210 to cancel the service. The request of step S161 includes the license ID and the scheduled cancellation date.

In step S162, the business application 1210 requests the business license administration unit 1154 to change the license information of the service license. The request of step S162 includes the license ID and the scheduled cancellation date.

After the process of step S162, the business license administration unit 1154 requests the license administration unit 1124 for providing the service corresponding to the sales region of the service ID to be canceled to change the license information in a manner similar to step S162. On the scheduled cancellation date, the business license administration unit 1154 starts a batch process in step S163. In step S164, the business license administration unit 1154 change the state of the license information of the service license associated with the license ID to the "cancellation".

In step S165, the business license administration unit 1154 reports the license information of the service license to be canceled to the license administration unit 1124 for providing the service corresponding to the sales region. In step S166, the license administration unit 1124 for providing the service changes the state of the reported license information of the service license to the "cancellation".

In step S167, the license administration unit 1124 for providing the service reports the change of the license information to the authentication and permission unit 1121. In step S168, the authentication and permission unit 1121 compares the upper limit of the number of the licenses decreased by the cancellation of the license with the number of people to whom the use authority is allocated.

In step S169, when the number of people, to whom the use authority is allocated, exceeds the upper limit of the number of the licenses, which decreases by the cancellation, the authentication and permission unit 1121 sends an e-mail reporting that the number of people, to whom the use authority is allocated, exceeds the upper limit of the number of the licenses to the administrator. In step S170, the authentication and permission unit 1121 sends an e-mail reporting that the number of people, to whom the use authority is allocated, exceeds the upper limit of the number of the licenses, which decreases by the cancellation, to the business controller.

According to the process of the sequence chart illustrated in FIG. 29, the cancellation of the license is performed by an expiry of the license or the like. In a case where the number of users to whom the use authority has been allocated exceeds the upper limit of the number of the licenses, it is possible to report that the number of users to whom the use authority is allocated exceeds the upper limit of the number of the licenses to the administrator or the business controller.

In the process illustrated in FIG. 29, described is the example of reporting that the number of users to whom the use authority is allocated exceeds the upper limit of the number of the licenses in the case where the number of users to whom the use authority was allocated exceeds the upper limit of the number of the licenses. However, a review of the allocation of the use authority may be automatically performed as described below.

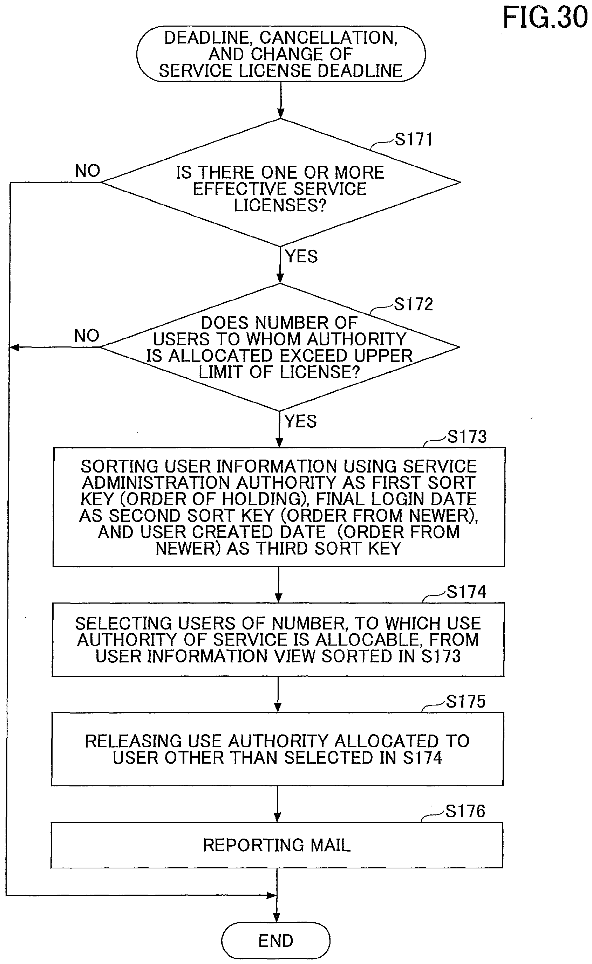

FIG. 30 is a flowchart of an exemplary process of reviewing the allocation of the use authority. The process of reviewing the allocation of the use authority illustrated in FIG. 30 is performed in a case where the number of the users to whom the use authority was allocated exceeds the upper limit of the number of the licenses by the license expiry, the cancellation, the change, or the like.

In step S171, the authentication and permission unit 1121 determines whether at least one activated service license exists or not. If there exists the at least one activated service license, the authentication and permission unit 1121 determines whether the number of the user to whom the use authority is allocated exceeds the upper limit of the number of the licenses in step S172.

The authentication and permission unit 1121 rearranges the user information as illustrated in FIG. 11 as follows if the number of the users to whom the use authority is allocated exceeds the upper limit of the number of the licenses in step S173.

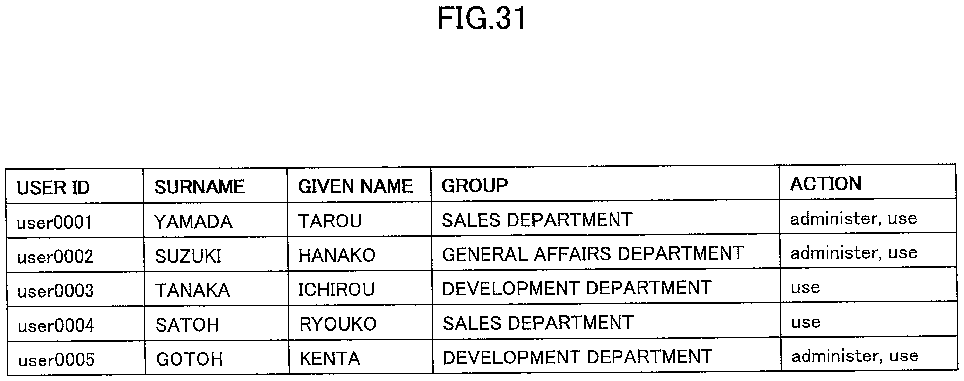

The authentication and permission unit 1121 rearranges the user information using a value of an action of the service authority information (described below) illustrated in FIG. 31 as a first sort key, the final login date as a second sort key, and the user created date as a third sort key. For example, the authentication and permission unit 1121 refers to the value of the action of the service authority information as the first sort key (described below) and rearranges the user information so that the user such as the administrator, to whom an administration authority for the service is allocated, is arranged at a higher position as the first priority.

Further, the authentication and permission unit 1121 refers to the final login date of the user information as the second sort key and rearranges the user information so that the user whose final login date is new is arranged at a higher position as the second priority. The final login date of the user information is renewed in a case where a login process (e.g, a ticket issuance process) is internally performed in addition to the case where the user finally logs in. Further, the authentication and permission unit 1121 refers to the user created date of the user information as a third sort key and rearranges the user information so that the user whose user created date is new (the user who is more recently created) is arranged at a higher position as the third priority.

The first to third priorities described above are an example and the contents of the first to third priorities may be substituted.

Next, in step S174, the authentication and permission unit 1121 selects users as many as a number (the number of the upper limit of the number of the licenses) of allocable use authorities of the service from a view of the user information arranged in step S173.

Next, in step S175, the authentication and permission unit 1121 releases the use authorities allocated to the users who are not selected in step S174. Next, in step S176, the authentication and permission unit 1121 reports that a part of the use authorities for the service allocated to the user is released to an administrator of a tenant, an administrator to whom the use authority is allocated, the user selected in step S174, and so on by an e-mail.

If the activated service license is not left at all in step S171, the authentication and permission unit 1121 does not report by the e-mail. For example, the activated service license is not left at all at a time of cancelling an ordinary license. Further, in a case where the number of the user to whom the use authority is allocated does not exceed the upper limit of the number of the licenses, the authentication and permission unit 1121 does not report by an e-mail. In step S176, the authentication and permission unit 1121 reports that the use authority is released to the user whose use authority is released.

Hereinafter, referring to FIGs. 31 to 33, described is the process of the flowchart illustrated in FIG. 30. FIG. 31 illustrates a structure of another exemplary list of service authority information. The list of the service authority information illustrated in FIG. 31 is formed by adding the users having the user ID "user0004" and "user0005" to the list of the service authority information illustrated in FIG. 21.

User information of the user of the list of the service authority information and a user authority list are as illustrated in FIGs. 32A and 32B. FIG. 32A illustrates a part of the user information. FIG. 32B illustrates a user authority list.

Hereinafter, described is a process in a case where the number of the users to whom the use authority is allocated is "5" and the upper limit of the number of the licenses decreases from "5" to "3". In step S172 of the flowchart illustrated in FIG. 30, it is determined that the number "5" of the users to whom the use authority is allocated exceeds the upper limit "3" of the number of the licenses in step S172.

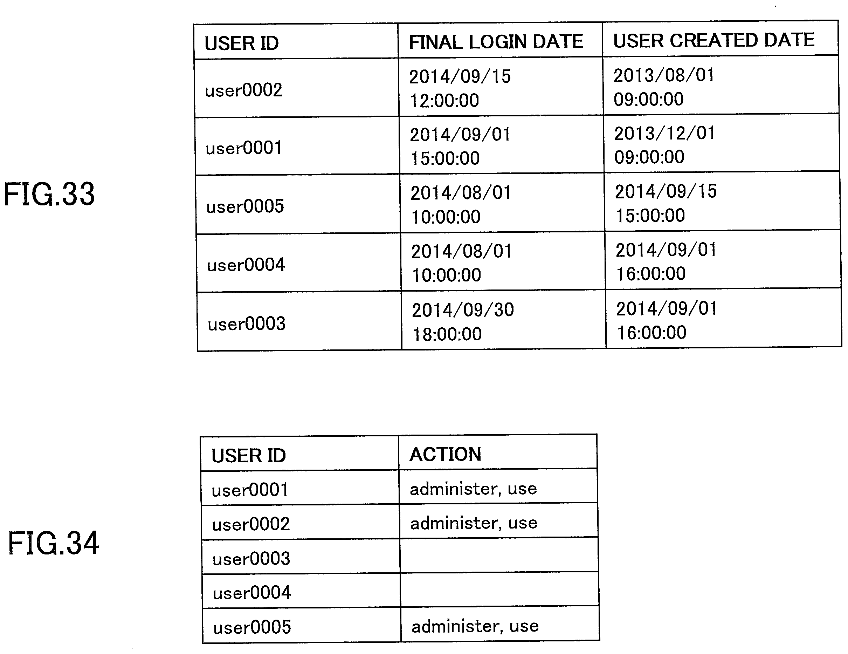

In step S173, the authentication and permission unit 1121 rearranges the user information illustrated in FIG. 32A so as to be the user information illustrated in FIG. 33. FIG. 33 illustrates a structure of exemplary user information rearranged in a priority order. The user information is rearranged so that the users other than the user having the user ID "user0003" who has the administration authority are arranged at first to fourth places in a new order (from older to newer). Because the final login dates of the users having the user IDs "user0004" and "user0005" are the same, the users having the user IDs "user0004" and "user0005" are rearranged in a new order (from older to newer) of the user created date at the third to fourth places. In the user information illustrated in FIG. 33, the user having the user ID "user0003" who has not the administration authority is rearranged to position at the fifth place.

In step S174, the authentication and permission unit 1121 selects three users corresponding to the number "3" of the allocable use authorities of the service from the view of the rearranged user information illustrated in FIG. 33 in an order having the higher priority order. In a case of the view of the user information, the users having the user IDs "user0002", "user0001", and "user0005" are selected.

In step S175, the authentication and permission unit 1121 releases (see FIG. 34) the use authority allocated to the users having the user IDs "user0003" and "user0004", which are not selected in step S174 as illustrated in FIG. 32B. FIG. 34 illustrates a structure of an exemplary user authority list in which the use authority is released.

As illustrated in FIG. 34, the authentication and permission unit 1121 releases the use authority of a part of the users so that the number of the users to whom the use authority has been allocated resides within the upper limit of the number of the licenses in a case where the upper limit of the number of the licenses decreases.

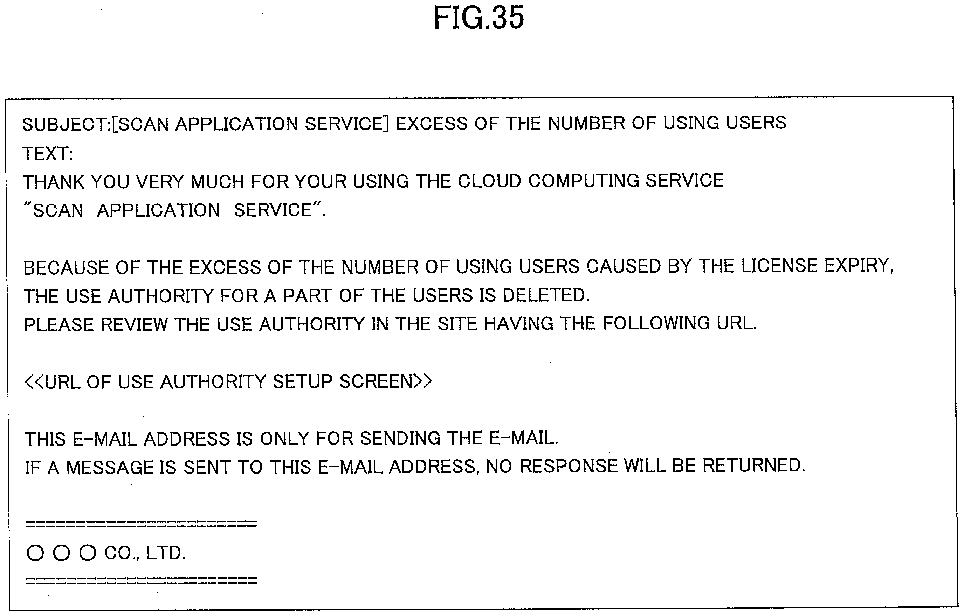

The e-mail reported in step S176 illustrated in FIG. 30 may be as illustrated in FIG. 35. FIG. 35 illustrates a structure of an exemplary e-mail reporting the release of the use authority of the service. The content of the e-mail illustrated in FIG. 35 is an example and may include a user ID or the like of the user whose use authority is released. Here, the user license is applied to the exemplary license mode. However, an apparatus license and the user license may be applied to the license mode.

### <<Continuation of ending service>>

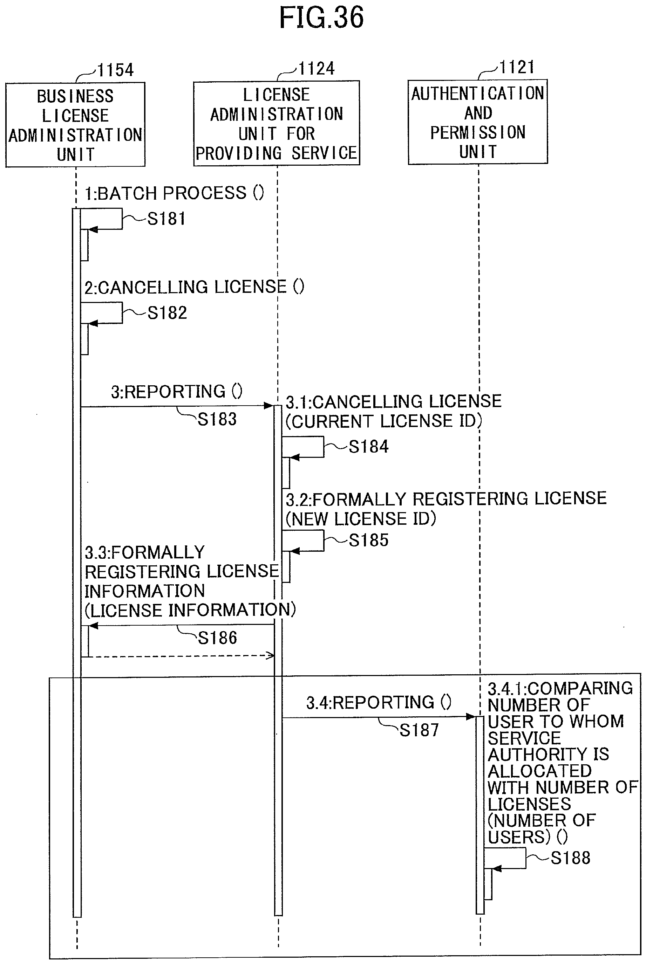

FIG. 36 is a sequence chart of an exemplary process of continuing an ending service. Referring to FIG. 36, the state of the license information of the current license is changed to "after use" on the scheduled cancellation date of the current license and the state of the new license is changed to "now being used (not renewed)".

On the scheduled cancellation date, the business license administration unit 1154 starts a batch process in step S181. In step S182, the business license administration unit 1154 changes the state of the license information of the service license associated with the current license ID.

In step S183, the license administration unit 1154 reports the license information of the service license to be canceled to the license administration unit 1124 for providing the service corresponding to the sales region. In step S184, the license administration unit 1124 for providing the service changes the state of the license information associated with the service ID of the current license to the "cancellation".

In step S185, the license administration unit 1124 for providing the service changes the state of the license information associated with the service ID of the new license to the "formal registration". In step S186, the license administration unit 1124 for providing the service requests the license administration unit 1154 to perform the formal registration of the license information of the service license.

In step S187, the license administration unit 1124 for providing the service reports the change of the license information to the authentication and permission unit 1121. In step S188, the authentication and permission unit 1121 compares the upper limit of the number of the licenses with the number of people to whom the use authority is allocated.

When the number of people to whom the use authority was allocated exceeds the upper limit of the number of the licenses, the authentication and permission unit 1121 sends an e-mail reporting that the number of people to whom the use authority is allocated exceeds the upper limit of the number of the licenses to the administrator and the business controller.

According to the process of the sequence chart illustrated in FIG. 36, a process of continuing the license is performed by the renewal of the license. In a case where the number of users to whom the use authority has been allocated exceeds the upper limit of the number of the licenses, it is possible to report that the number of users to whom the use authority has been allocated exceeds the upper limit of the number of the licenses to the administrator or the business controller.

### <<Display of service selection screen>>

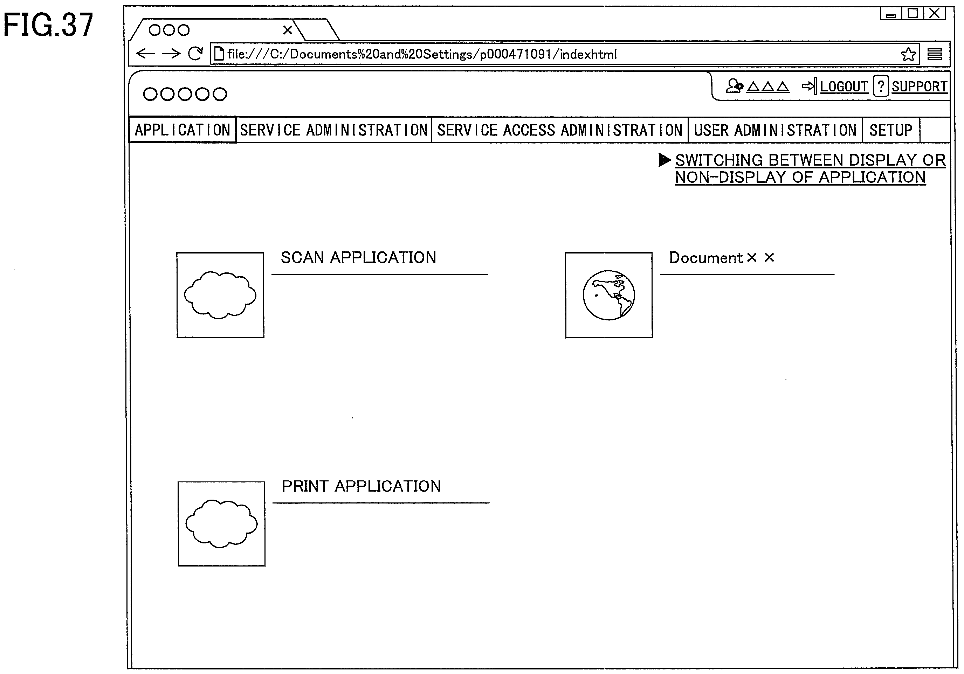

When the user accesses the portal service application 1111, the portal service application 1111 can display a service selection screen as illustrated in FIG. 37 on a user terminal 1202. FIG. 37 is an image chart of an exemplary service selection screen. The service selection screen illustrated in FIG. 37 displays screen elements such as a tab or an icon for selecting the service corresponding to the service license when the service license whose license information is "now being used" indicating the activated service license in an organization to which the accessing user belongs.

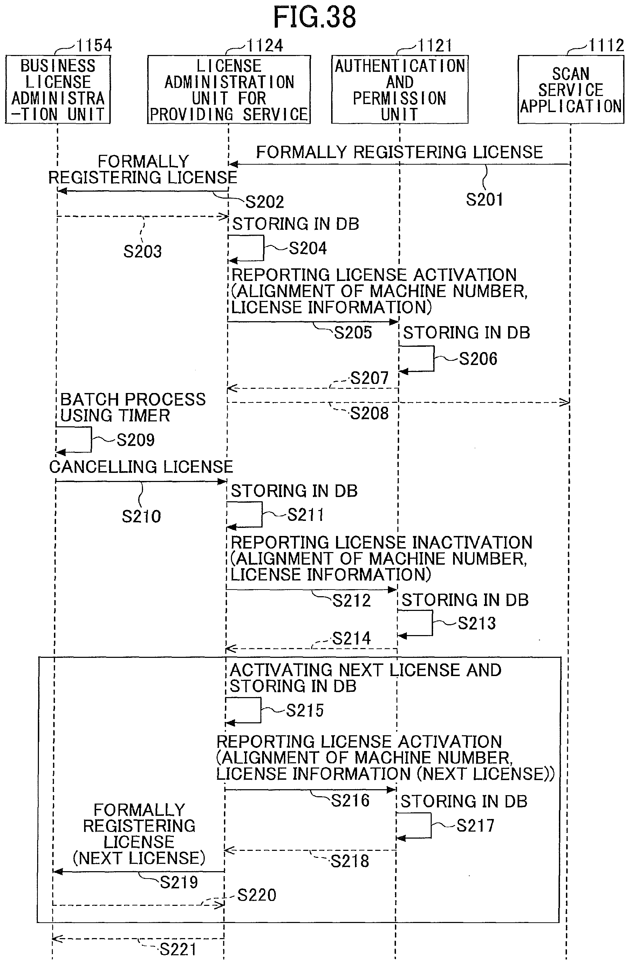

In order to display the service selection screen illustrated in FIG. 37, the service providing system 1100 stores service permission information as illustrated in FIG. 38. FIG. 38 is a sequence chart of an exemplary process of storing the service permission information. Description of processes similar to the above described sequence chart is appropriately omitted.

In step S201, the scan service application 1112 requests the license administration unit 1124 for providing the service to perform the formal registration of the service license. In step S201, the scan service application 1112 reports the machine type and machine number of the apparatus to the license administration unit 1124 for providing the service.

In step S202, the license administration unit 1124 for providing the service requests the business license administration unit 1154 to perform the formal registration of the service license. In step S203, the business license administration unit 1154 reports a result of the formal registration of the service license to the license administration unit 1124 for providing the service.

When the result of the formal registration indicates the success, the license administration unit 1124 for providing the service stores the license information of the formal registered service license and the machine type and machine number in the license DB 1209 in step S204.

In step S205, the license administration unit 1124 for providing the service reports the activation of the service to the authentication and permission unit 1121. The report of the activation of the service is a report of a license activation for the first apparatus and a report of an addition of apparatuses for the second and subsequent apparatuses. The report of step S205 includes the license information of the service license activated by the formal registration and an arrangement of the machine types and machine numbers of the apparatuses subjected to the license activation.

Further, in step S206, the authentication and permission unit 1121 renews the service permission information stored in the service permission table illustrated in FIG. 33 based on the report of step S205. The service permission information is a list of the service which can be used by the organization.

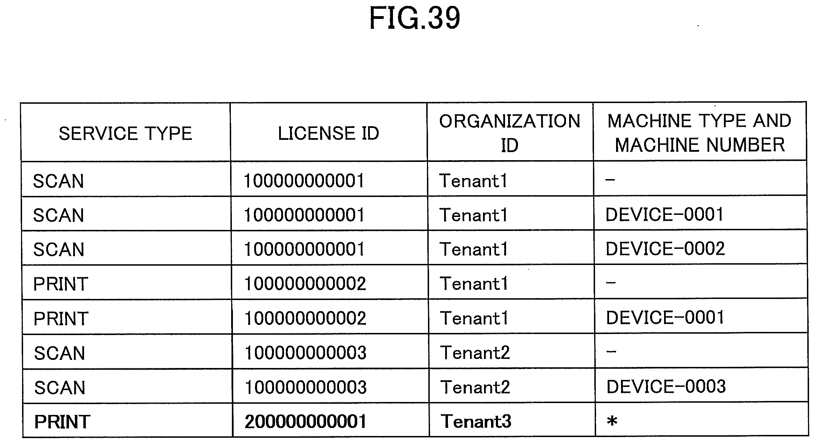

FIG. 39 illustrates an exemplary structure of the service permission table. The service permission table illustrated in FIG. 39 includes a service type, a license ID, an organization ID, and the machine type and machine number as items. In the process of step S206, the service permission information is added to the service permission table illustrated in FIG. 39.

In a case where the apparatus license is necessary, the authentication and permission unit 1121 adds or deletes a record having the machine type and machine number of "-" as illustrated in FIG. 39 and a record having the machine type and machine number of a target apparatus as illustrated in FIG. 39 at a timing of activating/inactivating the license. In a case where the apparatus license is unnecessary, the authentication and permission unit 1121 adds or deletes a record having the machine type and machine number of "*" as illustrated in FIG. 39. The authentication and permission unit 1121 adds or deletes a record having the machine type and machine number of the target apparatus as illustrated in FIG. 39 at a timing of adding/deleting the apparatus.

The service permission table illustrated in FIG. 39 has the record having the machine type and machine number of "-" and the record having the machine type and machine number of at least one apparatus (the machine type and machine number of an apparatus provided with the service activation). Further, when the apparatus license is unnecessary (only the user license is necessary) in the service permission table illustrated in FIG. 39, a record whose machine type and machine number is a wildcard of "*" is stored.

In step S207, the authentication and permission unit 1121 returns a response to the report of step S205. In step S208, the license administration unit 1124 for providing the service reports the result of the formal registration of the service license to the scan service application 1112.

On the scheduled cancellation date, the business license administration unit 1154 starts a batch process in step S209. In step S210, the business license administration unit 1154 requests the license administration unit 1124 for providing the service requests the license administration unit 1124 for providing the service to perform the cancellation of the service license.

In step S211, the license administration unit 1124 for providing the service causes the license information of the canceled service license to be changed (reflected) in the license DB 1209. In step S212, the license administration unit 1124 for providing the service reports the inactivation of the license to the authentication and permission unit 1121.

Here, the report of the service inactivation includes a report of a license inactivation and a report of an apparatus deletion. In step S212, the license inactivation is reported. The report of step S212 includes the license information of the service license inactivated by the cancellation and an arrangement of the machine types and machine numbers of the apparatuses provided with the license inactivation.

Further, in step S213, the authentication and permission unit 1121 renews the service permission information stored in the service permission table illustrated in FIG. 39 based on the report of step S212. In the process of step S213, the service permission information corresponding to the license ID provided with the license inactivation is deleted from the service permission table illustrated in FIG. 39.

When the apparatus deletion is reported, in the process of step S213, the service permission information provided with the apparatus deletion and corresponding to the arrangement of the machine types and machine numbers is deleted from the service permission table illustrated in FIG. 39. The authentication and permission unit 1121 may hold a subset (a cache) of the license information. In step S214, the authentication and permission unit 1121 returns a response to the report of step S212.

When the next license is registered, the license administration unit 1124 for providing the service performs the process of step S215. The license administration unit 1124 for providing the service causes the license information of the next license to be formally registered to be changed (reflected) in the license DB 1209.

In step S216, the license administration unit 1124 for providing the service reports the activation of the service to the authentication and permission unit 1121. The report of step S216 includes the license information of the next license activated by the formal registration and an arrangement of the machine types and machine numbers of the apparatuses provided with the license activation. In step S217, the authentication and permission unit 1121 renews the service permission information stored in the service permission table illustrated in FIG. 39 based on the report of step S216.

In the process of, for example, step S217, the record having the machine type and machine number of "-" and the record having the machine type and machine number of the target apparatus, which are illustrated in FIG. 39, or the record having the machine type and machine number of "*", which is illustrated in FIG. 39, is added as the service permission information. In step S218, the authentication and permission unit 1121 returns a response to the report of step S216.

In step S219, the license administration unit 1124 for providing the service requests the business license administration unit 1154 to perform the formal registration of the next license. In step S220, the business license administration unit 1154 reports the result of the formal registration of the next license to the license administration unit 1124 for providing the service. In step S221, the license administration unit 1124 for providing the service reports the result of the cancellation of the current license to the business license administration unit 1154.

In the process of the sequence chart of FIG. 38, it is possible to improve a response performance for generating the service selection screen and a response performance for determining whether the service can be performed or not by making the service permission information. Further, the service permission table illustrated in FIG. 39 is applicable to an apparatus which does not require the apparatus license.

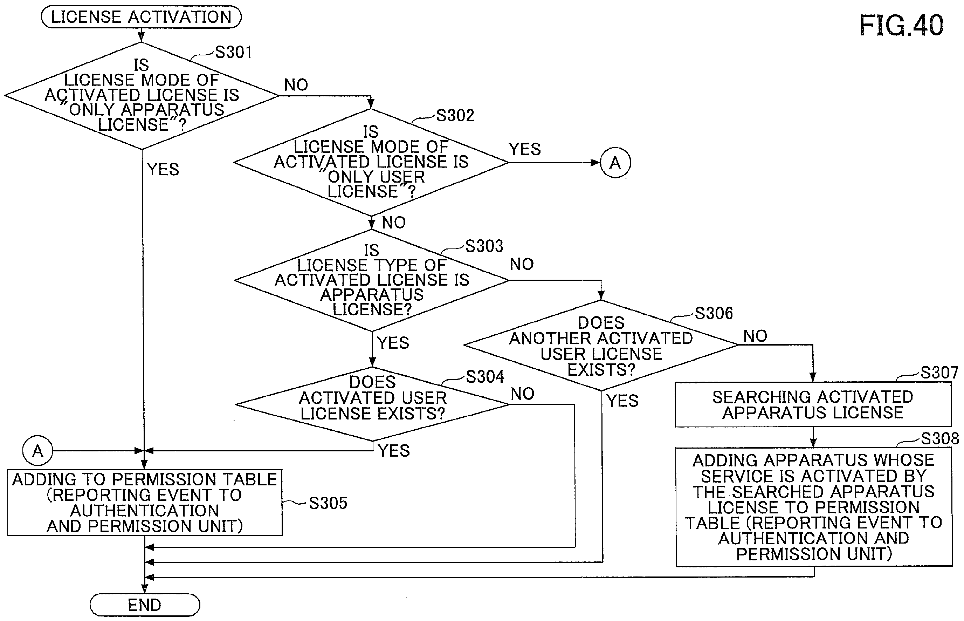

The authentication and permission unit 1121 receiving the report of the license activation adds the service permission information to the service permission table illustrated in FIG. 39 by a procedure illustrated in, for example, FIG. 40. FIG. 40 is a flowchart of an exemplary process of renewing the service permission table.

In step S301, the authentication and permission unit 1121 refers to the license information, the activation of which is reported, and determines whether the license mode is "only apparatus license" or not.

If the license mode is "only apparatus license", the authentication and permission unit 1121 determines that the combination of the service licenses is unnecessary. In step S305, the authentication and permission unit 1121 adds the service permission information corresponding to the machine type and machine number, which is provided with the license activation, to the service permission table.

If the license mode is not "only apparatus license", the process goes to step S302. The authentication and permission unit 1121 determines whether the license mode is "only apparatus license" or not by referring to the license information which is a target of the report of the activation.

If the license mode is "only apparatus license", the authentication and permission unit 1121 determines that the combination of the service licenses is unnecessary. In step S305, the authentication and permission unit 1121 adds the service permission information corresponding to the machine type and machine number, which is provided with the license activation, to the service permission table.

If the license mode is not "only apparatus license", the authentication and permission unit 1121 determines that the combination of the service licenses is necessary. Then, the process goes to step S303. The authentication and permission unit 1121 determines whether the license type of the license information provided with the report of the license activation is "apparatus license" or not.

If the license type is "apparatus license", the process goes to step S304, and the authentication and permission unit 1121 determines whether the license information whose license type is "user license" and which is provided with the license activation exists or not.

If there exists the license information whose license type is "user license" and which is provided with the license activation, the process goes to step S305, and the authentication and permission unit 1121 adds the service permission information to the service permission table.

If there does not exist the license information whose license type is "user license" and which is provided with the license activation, the authentication and permission unit 1121 does not add the service permission information to the service permission table.

If the license type is not "apparatus license" in step S303, the process goes to step S306, and the authentication and permission unit 1121 determines whether other license information whose license type is "user license" and which is provided with the license activation exists or not.

If there exists the other license information whose license type is "user license" and which is provided with the license activation, the authentication and permission unit 1121 does not add the service permission information to the service permission table.

If there does not exist the other license information whose license type is "user license" and which is provided with the license activation, the process goes to step S307, and the authentication and permission unit 1121 searches the license information whose license type is "apparatus license" and which is provided with the license activation.

In step S308, the authentication and permission unit 1121 adds the service permission information corresponding to the machine type and machine number of the apparatus, which is provided with the license activation in the license information of the search result acquired in step S307, to the service permission table illustrated in FIG. 39.

The searches in steps S304, S306, and S307 are performed for license information which is provided with the license activation and has the same organization ID, service type, and license mode as those of the license information provided with the report of the license activation.

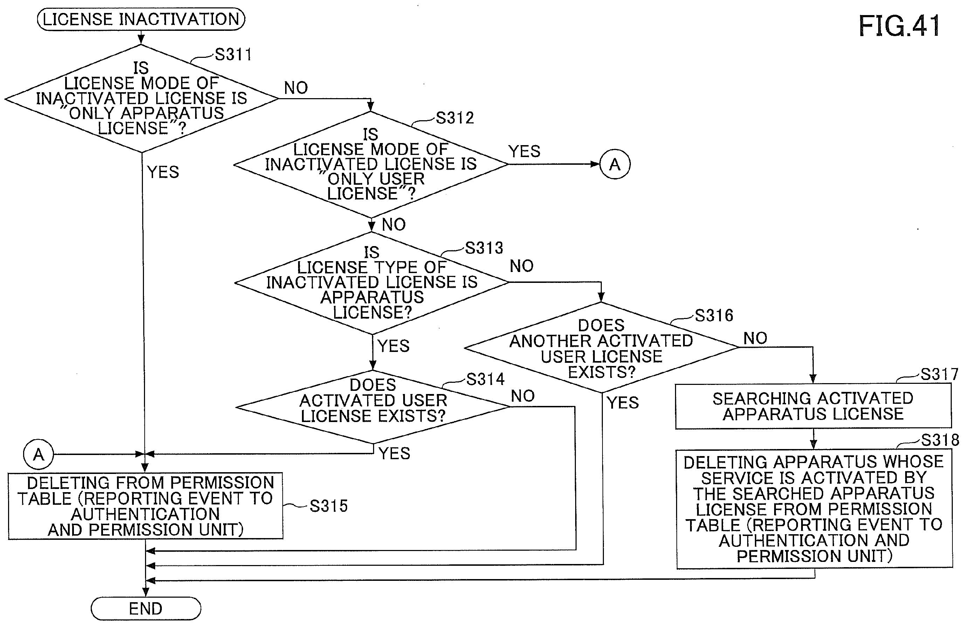

The authentication and permission unit 1121 receiving the report of the license inactivation deletes the service permission information from the service permission table illustrated in FIG. 39 with a procedure illustrated in, for example, FIG. 41. FIG. 41 is a flowchart of another exemplary process of renewing the service permission table.

In step S311, the authentication and permission unit 1121 refers to the license information, the inactivation of which is to be reported, and determines whether the license mode is "only apparatus license" or not.

If the license mode is "only apparatus license", the authentication and permission unit 1121 determines that the combination of the service licenses is unnecessary. In step S315, the authentication and permission unit 1121 deletes the service permission information corresponding to the machine type and machine number, which is provided with the license inactivation, from the service permission table.

If the license mode is not "only apparatus license", the process goes to step S312, and the authentication and permission unit 1121 determines whether the license mode is "only apparatus license" or not by referring to the license information which is a target of the report of the inactivation.

If the license mode is "only apparatus license", the authentication and permission unit 1121 determines that the combination of the service licenses is unnecessary. In step S315, the authentication and permission unit 1121 deletes the service permission information corresponding to the machine type and machine number, which is provided with the license inactivation, from the service permission table.

If the license mode is not "only apparatus license" and "only user license", the authentication and permission unit 1121 determines that the combination of the service licenses is necessary. Then, the process goes to step S313. The authentication and permission unit 1121 determines whether the license type of the license information provided with the report of the license inactivation is "apparatus license" or not.

If the license type is "apparatus license", the process goes to step S314, and the authentication and permission unit 1121 determines whether the license information whose license type is "user license" and which is provided with the license activation exists or not.

If there exists the license information whose license type is "user license" and which is provided with the license activation, the process goes to step S315 and the authentication and permission unit 1121 deletes the service permission information from the service permission table. If there does not exist the license information whose license type is "user license" and which is provided with the license activation, the authentication and permission unit 1121 performs nothing.

If the license type is not "apparatus license" in step S313, the process goes to step S316, and the authentication and permission unit 1121 determines whether other license information whose license type is "user license" and which is provided with the license activation exists or not.

If there exists the other license information whose license type is "user license" and which is provided with the license activation, the authentication and permission unit 1121 does not delete the service permission information from the service permission table.

If there does not exist the other license information whose license type is "user license" and which is provided with the license activation, the process goes to step S317, and the authentication and permission unit 1121 searches the license information whose license type is "apparatus license" and which is provided with the license activation.

In step S318, the authentication and permission unit 1121 deletes the service permission information corresponding to the machine type and machine number of the apparatus, which is provided with the license activation in the license information of the search result acquired in step S317, from the service permission table illustrated in FIG. 39.

The searches in steps S314, S316, and S317 are performed for license information which is provided with the license activation and has the same organization ID, service type, and license mode as those of the license information provided with the report of the license inactivation.

### <<Determination whether service can be performed>>

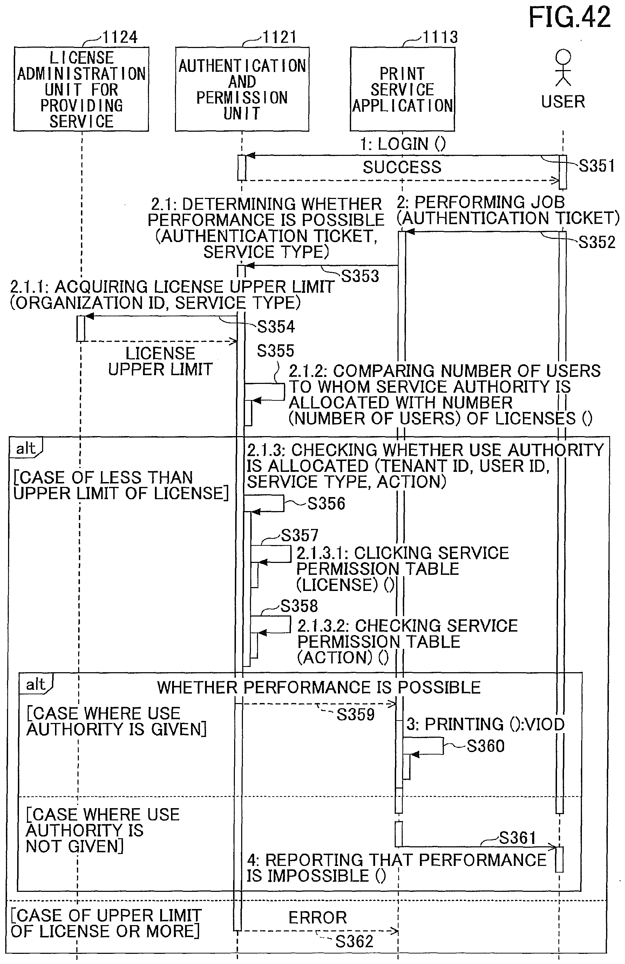

In order to determine whether the service can be performed by the user, the service providing system 1100 performs a process illustrated in FIG. 42. FIG. 42 is a sequence chart of an exemplary process of determining whether the service can be performed or not.

In step S351, the user operates the MFP 1203 to log in the print service application 1113. In step S352, the user operates the MFP 1203 to instruct to perform a job. The MFP 1203 requests the print service application 1113 to perform the job.

In step S353, the print service application 1113 designates the authentication ticket, the service type, and the machine type and machine number and inquires to the authentication and permission unit 1121 about whether the print service of the MFP 1203 can be performed. In step S354, the authentication and permission unit 1121 acquires the upper limit of the number of the licenses from the license administration unit 1124 for providing the service by designating the organization ID and the service type.

In step S355, the authentication and permission unit 1121 compares the upper limit of the number of the licenses with the number of people to whom the use authority is allocated. If the number of people to whom the use authority is allocated does not exceed the upper limit of the number of the licenses, the authentication and permission unit 1121 starts checking whether the use authority is allocated by designating the organization ID, the user ID, the service type, and the action.

In step S357, the authentication and permission unit 1121 performs a check of the license using, for example, the service permission table illustrated in FIG. 22. The check of step S357 is performed to determine whether the combination of the organization ID, the user ID, and the service type, which combination is designated in step S356, exists in the service permission table illustrated in FIG. 22.

In step S358, the authentication and permission unit 1121 performs a check of the action using, for example, the service permission table illustrated in FIG. 22. The check of step S358 is performed to determine whether the combination of the organization ID, the user ID, the service type, and the action, which combination is designated in step S356, exists in the service permission table illustrated in FIG. 22.

In step S359, the authentication and permission unit 1121 reports information of whether performance is possible determined based on the check of whether the use authority is allocated to the print service application 1113. When the use authority is allocated, the process goes to step S360 and the print service application 1113 starts printing. On the other hand, when the use authority is not allocated, the print service application 1113 displays, for example, an error and reports it to the user.

If the number of people to whom the use authority is allocated exceeds the upper limit of the number of the licenses in step S355, the process goes to step S362, and the authentication and permission unit 1121 reports an error to the print service application 1113. However, if the number of people to whom the use authority is allocated exceeds the upper limit of the number of the licenses in step S355, the authentication and permission unit 1121 may report the error to the print service application 1113 and may cause the print service application 1113 to perform the job.

According to the process of the sequence chart illustrated in FIG. 42, because it is possible to determine whether the service can be performed based on the use authority held by the user, a use of the function for each user can be limited.

### [General Overview]

Within the service providing system 1100 of the first embodiment, the license administration unit 1124 for providing the service and the business license administration unit 1154 are provided, and a difference among the multiple business systems is absorbed by the business license administration unit 1154 to facilitate the administration of the license.

Therefore, the service providing system 1100 of the first embodiment can easily constrain the use of the application 1101 using various volume licenses issued by the multiple business systems. Further, because the service providing system 1100 of the first embodiment can activate the multiple apparatuses by one volume license, the number of the licenses to be treated can be reduced and the administration of the license can be facilitated.

The service providing apparatus 1208 is an example of a service providing unit. The license administration server 1206 is an example of a license administration unit. The license DB 1207 is an example of a first memory unit. The license DB 1209 is an example of a second memory unit. The portal service application 1111 is an example of a setup reception unit. The authentication and permission unit 1121 is an example of an authority setup unit.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority or inferiority of the invention. Although an information processing system has been described in detail, it should be understood that various changes, substitutions, and alterations could be made thereto without departing from the scope of the invention as claimed.

## Claims

1. An information processing system including a terminal apparatus (1202) and at least one information processing apparatus, the information processing system comprising:
at least one service providing unit (1208) configured to provide a service corresponding to an authority of a user to whom the authority is allocated by a license; and
a license administration unit (1206, 1204) that includes a first memory unit (1207) configured to store license information (1144) of the license and to administer the license information (1144),
wherein the at least one service providing unit (1208, 1205) includes:
a second memory unit (1209, 1103) that is configured to store a copy of the license information (1144), and
a setup reception unit (1111, 1205) that is configured to:
generate an authority setup screen for receiving a setup of the authority for the service for each service type , cause the authority setup screen to be displayed in the terminal apparatus (1202), and receive, the setup of the authority for the service from the authority setup screen, and
an authority setup unit (1121) configured to set up the authority for the service received from the terminal apparatus (1202), whereby a number of users to whom the authority is allocated by the license does not exceed a number of users to whom the authority can be allocated,
wherein the authority setup unit (1121, 1205) compares the number of users to whom authority is allocated by the license after the setup for the received authority is performed with the number of users to whom the authority can be allocated by the license after the setup for the received service is perfomed and performs the setup of the authority received from the terminal apparatus (1202)if the number of users to whom the authority is allocated by the license after the setup for the received authority is performed does not exceed the number of users to whom the authority can be allocated by the license afer the setup for the received authority is performed, and
wherein the authority setup unit(1121, 1205) determines, when the license is cancelled, the number of users to whom the authority can be allocated by a license other than the cancelled license and reports that the number of users to whom the authority has been allocated exceeds the number of users to whom the authority can be allocated by the license other than the cancelled license, if the number of users to whom the authority has been allocated exceeds the number of users to whom the authority can be allocated by the license other than the cancelled license.

2. The information processing system according to claim 1,
wherein the setup reception unit (1111, 1205) causes the terminal apparatus (1202) to display the number of users to whom the authority can be allocated by at least one license and a number of users to whom the authority has been allocated by the at least one license.

3. The information processing system according to claim 1,
wherein the setup reception unit (1111, 1205) causes the terminal apparatus (1202) to display the number of users to whom the authority can be allocated by one license selected from at least one license and a number of users to whom the authority has been allocated by the one license and receives the setup of the authority for the service by designating the one license, the service type, the user, and the authority for the authority.

4. The information processing system according to claims 1 to 3,
wherein, in response to a renewal of the license, the authority setup unit (1121) determines the number of users to whom the authority can be allocated by the renewed license and reports that the number of users to whom the authority has been allocated exceeds the number of users to whom the authority can be allocated by the renewed license, if the number of users to whom the authority has been allocated exceeds the number of users to whom the authority can be allocated by the renewed license.

5. The information processing system according to claims 1 to 4,
wherein the authority setup unit (1111, 1205) determines, when the license is canceled, the number of users to whom the authority can be allocated by the license other than the canceled license and releases an allocation of the authority of the license to a part of the user so that the number of users to whom the authority can be allocated by the license other than the canceled license resides within the number of users to whom the authority can be allocated, if the number of users to whom the authority has been allocated exceeds the number of users to whom the authority can be allocated by the license other than the canceled license.

6. The information processing system according to claim 5,
wherein the authority setup unit (1111, 1205) receives a setup of the user to whom the authority is preferentially maintained to be allocated.

7. A non-transient computer-readable recording medium with a program recorded thereon, the program being executed by a processor in an information processing system including a terminal apparatus (1202) and at least one information processing apparatus, wherein the program is executed by the processor to cause the information processing system to implement:
at least one service providing unit (1208) configured to provide a service corresponding to an authority of a user to whom the authority is allocated by a license;
a license administration unit (1206, 1204) that includes a first memory unit (1207) configured to store license information (1144) of the license, and that administers the license information (1144);
wherein the at least one service providing unit includes:
a second memory unit (1209, 1103) that is configured to store a copy of the license information (1144), and
a setup reception unit (1111, 1205) that is configured to:
generate an authority setup screen for receiving a setup of the authority for the service for each service type, cause the authority setup screen to be displayed in the terminal apparatus (1202), and receive the setup of the authority for the service from the authority setup screen, and
an authority setup unit (1121) configured toset up the authority for the service received from the terminal apparatus (1202), whereby a number of users to whom the authority is allocated by the license does not exceed a number of users to whom the authority can be allocated,
wherein the authority setup unit (1121, 1205) compares the number of users to whom authority is allocated by the license after the setup for the received authority is performed with the number of users to whom the authority can be allocated by the license after the setup for the received service is perfomed and performs the setup of the authority received from the terminal apparatus (1202)if the number of users to whom the authority is allocated by the license after the setup for the received authority is performed does not exceed the number of users to whom the authority can be allocated by the license afer the setup for the received authority is performed, and
wherein the authority setup unit(1121, 1205) determines, when the license is cancelled, the number of users to whom the authority can be allocated by a license other than the cancelled license and reports that the number of users to whom the authority has been allocated exceeds the number of users to whom the authority can be allocated by the license other than the cancelled license, if the number of users to whom the authority has been allocated exceeds the number of users to whom the authority can be allocated by the license other than the cancelled license.

8. A method of administrating a license performed in an information processing system including a terminal apparatus (1202) and at least one information processing apparatus, the method of administrating the license comprising:
providing, by at least one service providing unit (1208), a service corresponding to an authority of a user to whom the authority is allocated by a license;
administering, by a license administration unit (1206, 1204), the license information (1144), the license administration unit including a first memory unit (1207) storing license information of the license;
wherein the providing, by the at least one service providing unit, includes:
storing, by a second memory unit (1209, 1103), a copy of the license information (1144);
generating, by a setup reception unit (1111, 1205), an authority setup screen for receiving a setup of the authority for using the service for each service type;
causing the authority setup screen to be displayed in the terminal apparatus (1202);
receiving the setup of the authority for using the service from the authority setup screen; and
setting up, by an authority setup unit (1121), the authority for the service received from the terminal apparatus (1202), whereby a number of users to whom the authority is allocated by the license does not exceed a number of users to whom the authority can be allocated;
comparing, by the authority setup unit (1121, 1205), the number of users to whom authority is allocated by the license after the setup for the received authority is performed with the number of users to whom the authority can be allocated by the license after the setup for the received service is perfomed and performing the setup of the authority received from the terminal apparatus (1202)if the number of users to whom the authority is allocated by the license after the setup for the received authority is performed does not exceed the number of users to whom the authority can be allocated by the license afer the setup for the received authority is performed; and
determining, by the authority setup unit(1121, 1205), when the license is cancelled, the number of users to whom the authority can be allocated by a license other than the cancelled license and reporting that the number of users to whom the authority has been allocated exceeds the number of users to whom the authority can be allocated by the license other than the cancelled license, if the number of users to whom the authority has been allocated exceeds the number of users to whom the authority can be allocated by the license other than the cancelled license.

## Patentansprüche

1. Informationsverarbeitungssystem, enthaltend ein Endgerät (1202) und mindestens ein Informationsverarbeitungsgerät, das Informationsverarbeitungssystem umfassend:
mindestens eine Dienstbereitstellungseinheit (1208), konfiguriert zum Bereitstellen eines Dienstes korrespondierend mit einer Berechtigung eines Benutzers, dem die Berechtigung durch eine Lizenz zugeteilt wird; und
eine Lizenzverwaltungseinheit (1206, 1204), die eine erste Speichereinheit (1207) enthält, konfiguriert zum Speichern von Lizenzinformationen (1144) der Lizenz und zum Verwalten der Lizenzinformationen (1144),
wobei die mindestens eine Dienstbereitstellungseinheit (1208, 1205) enthält:
eine zweite Speichereinheit (1209, 1103), die konfiguriert ist zum Speichern eines Exemplars der Lizenzinformationen (1144), und
eine Einstellungsempfangseinheit (1111, 1205), die konfiguriert ist zum:
Erzeugen eines Berechtigungseinstellbildschirms zum Empfangen einer Einstellung der Berechtigung für den Dienst für jeden Diensttyp, Bewirken, dass der Berechtigungseinstellbildschirm in dem Endgerät (1202) angezeigt wird, und Empfangen der Einstellung der Berechtigung für den Dienst von dem Berechtigungseinstellbildschirm und
eine Berechtigungseinstelleinheit (1121), konfiguriert zum Einrichten der von dem Endgerät (1202) empfangenen Berechtigung für den Dienst, wobei eine Anzahl von Benutzern, denen die Berechtigung durch die Lizenz zugeteilt wird, eine Anzahl von Benutzern, denen die Berechtigung zugeteilt werden kann, nicht übersteigt,
wobei die Berechtigungseinstelleinheit (1121, 1205) die Anzahl von Benutzern, denen Berechtigung durch die Lizenz zugeteilt wird, nachdem die Einstellung für die empfangene Berechtigung durchgeführt wird, mit der Anzahl von Benutzern, denen Berechtigung durch die Lizenz zugeteilt werden kann, nachdem die Einstellung für den empfangenen Dienst durchgeführt wird, vergleicht und die Einstellung für die von dem Endgerät (1202) empfangene Berechtigung durchführt, wenn die Anzahl von Benutzern, denen die Berechtigung durch die Lizenz zugeteilt wird, nachdem die Einstellung für die empfangene Berechtigung durchgeführt wird, die Anzahl von Benutzern, denen die Berechtigung durch die Lizenz zugeteilt werden kann, nachdem die Einstellung für die empfangene Berechtigung durchgeführt wird, nicht übersteigt, und
wobei die Berechtigungseinstelleinheit (1121, 1205), wenn die Lizenz storniert wird, die Anzahl von Benutzern, denen die Berechtigung durch eine andere Lizenz als die stornierte Lizenz zugeteilt werden kann, bestimmt und berichtet, dass die Anzahl von Benutzern, denen die Berechtigung zugeteilt wurde, die Anzahl von Benutzern, denen die Berechtigung durch die andere Lizenz als die stornierte Lizenz zugeteilt werden kann, übersteigt, wenn die Anzahl von Benutzern, denen die Berechtigung zugeteilt wurde, die Anzahl von Benutzern, denen die Berechtigung durch die andere Lizenz als die stornierte Lizenz zugeteilt werden kann, übersteigt.

2. Informationsverarbeitungssystem nach Anspruch 1,
wobei die Einstellungsempfangseinheit (1111, 1205) bewirkt, dass das Endgerät (1202) die Anzahl von Benutzern, denen die Berechtigung durch mindestens eine Lizenz zugeteilt werden kann, und eine Anzahl von Benutzern, denen die Berechtigung durch die mindestens eine Lizenz zugeteilt wurde, anzeigt.

3. Informationsverarbeitungssystem nach Anspruch 1,
wobei die Einstellungsempfangseinheit (1111, 1205) bewirkt, dass das Endgerät (1202) die Anzahl von Benutzern, denen die Berechtigung durch eine Lizenz, ausgewählt aus mindestens einer Lizenz, zugeteilt werden kann, und eine Anzahl von Benutzern, denen die Berechtigung durch die eine Lizenz zugeteilt wurde, anzeigt und die Einstellung der Berechtigung für den Dienst durch Bezeichnen der einen Lizenz, des Diensttyps, des Benutzers und der Berechtigung für die Berechtigung empfängt.

4. Informationsverarbeitungssystem nach den Ansprüchen 1 bis 3,
wobei, als Reaktion auf eine Erneuerung der Lizenz, die Berechtigungseinstelleinheit (1121) die Anzahl von Benutzern bestimmt, denen die Berechtigung durch die erneuerte Lizenz zugeteilt werden kann, und berichtet, dass die Anzahl von Benutzern, denen die Berechtigung zugeteilt wurde, die Anzahl von Benutzern, denen die Berechtigung durch die erneuerte Lizenz zugeteilt werden kann, übersteigt, wenn die Anzahl von Benutzern, denen die Berechtigung zugeteilt wurde, die Anzahl von Benutzern, denen die Berechtigung durch die erneuerte Lizenz zugeteilt werden kann, übersteigt.

5. Informationsverarbeitungssystem nach den Ansprüchen 1 bis 4,
wobei die Berechtigungseinteileinheit (1111, 1205), wenn die Lizenz storniert wird, die Anzahl von Benutzern, denen die Berechtigung durch die andere Lizenz als die stornierte Lizenz zugeteilt werden kann, bestimmt und eine Zuteilung der Berechtigung der Lizenz an einen Teil der Benutzer freigibt, so dass die Anzahl von Benutzern, denen die Berechtigung durch die andere Lizenz als die stornierte Lizenz zugeteilt werden kann, in der Anzahl von Benutzern, denen die Berechtigung zugeteilt werden kann, residiert, wenn die Anzahl von Benutzern, denen die Berechtigung zugeteilt wurde, die Anzahl von Benutzern, denen die Berechtigung durch die andere Lizenz als die stornierte Lizenz zugeteilt werden kann, übersteigt.

6. Informationsverarbeitungssystem nach Anspruch 5,
wobei die Berechtigungseinstelleinheit (1111, 1205) eine Einstellung des Benutzers empfängt, für welchen die Berechtigung vorzugsweise zur Zuteilung aufrechterhalten wird.

7. Nicht vergängliches computerlesbares Aufzeichnungsmedium mit einem darin aufgezeichneten Programm, wobei das Programm durch einen Prozessor in einem Informationsverarbeitungssystem, das ein Endgerät (1202) und mindestens ein Informationsverarbeitungsgerät enthält, ausgeführt wird, wobei das Programm durch den Prozessor ausgeführt wird, um zu bewirken, dass das Informationsverarbeitungssystem Folgendes implementiert:
mindestens eine Dienstbereitstellungseinheit (1208), konfiguriert zum Bereitstellen eines Dienstes korrespondierend mit einer Berechtigung eines Benutzers, dem die Berechtigung durch eine Lizenz zugeteilt wird;
eine Lizenzverwaltungseinheit (1206, 1204), die eine erste Speichereinheit (1207) enthält, konfiguriert zum Speichern von Lizenzinformationen (1144) der Lizenz, und die die Lizenzinformationen (1144) verwaltet;
wobei die mindestens eine Dienstbereitstellungseinheit enthält:
eine zweite Speichereinheit (1209, 1103), die konfiguriert ist zum Speichern eines Exemplars der Lizenzinformationen (1144), und
eine Einstellungsempfangseinheit (1111, 1205), die konfiguriert ist zum:
Erzeugen eines Berechtigungseinstellbildschirms zum Empfangen einer Einstellung der Berechtigung für den Dienst für jeden Diensttyp, Bewirken, dass der Berechtigungseinstellbildschirm in dem Endgerät (1202) angezeigt wird, und Empfangen der Einstellung der Berechtigung für den Dienst von dem Berechtigungseinstellbildschirm und
eine Berechtigungseinstelleinheit (1121), konfiguriert zum Einrichten der von dem Endgerät (1202) empfangenen Berechtigung für den Dienst, wobei eine Anzahl von Benutzern, denen die Berechtigung durch die Lizenz zugeteilt wird, eine Anzahl von Benutzern, denen die Berechtigung zugeteilt werden kann, nicht übersteigt,
wobei die Berechtigungseinstelleinheit (1121, 1205) die Anzahl von Benutzern, denen Berechtigung durch die Lizenz zugeteilt wird, nachdem die Einstellung für die empfangene Berechtigung durchgeführt wird, mit der Anzahl von Benutzern, denen Berechtigung durch die Lizenz zugeteilt werden kann, nachdem die Einstellung für den empfangenen Dienst durchgeführt wird, vergleicht und die Einstellung für die von dem Endgerät (1202) empfangene Berechtigung durchführt, wenn die Anzahl von Benutzern, denen die Berechtigung durch die Lizenz zugeteilt wird, nachdem die Einstellung für die empfangene Berechtigung durchgeführt wird, die Anzahl von Benutzern, denen die Berechtigung durch die Lizenz zugeteilt werden kann, nachdem die Einstellung für die empfangene Berechtigung durchgeführt wird, nicht übersteigt, und
wobei die Berechtigungseinstelleinheit (1121, 1205), wenn die Lizenz storniert wird, die Anzahl von Benutzern, denen die Berechtigung durch eine andere Lizenz als die stornierte Lizenz zugeteilt werden kann, bestimmt und berichtet, dass die Anzahl von Benutzern, denen die Berechtigung zugeteilt wurde, die Anzahl von Benutzern, denen die Berechtigung durch die andere Lizenz als die stornierte Lizenz zugeteilt werden kann, übersteigt, wenn die Anzahl von Benutzern, denen die Berechtigung zugeteilt wurde, die Anzahl von Benutzern, denen die Berechtigung durch die andere Lizenz als die stornierte Lizenz zugeteilt werden kann, übersteigt.

8. Verfahren zum Verwalten einer in einem Informationsverarbeitungssystem durchgeführten Lizenz, enthaltend ein Endgerät (1202) und mindestens ein Informationsverarbeitungsgerät, das Verfahren zum Verwalten der Lizenz umfassend:
Bereitstellen, durch mindestens eine Dienstbereitstellungseinheit (1208), eines Dienstes korrespondierend mit einer Berechtigung eines Benutzers, dem die Berechtigung durch eine Lizenz zugeteilt wird;
Verwalten, durch eine Lizenzverwaltungseinheit (1206, 1204), der Lizenzinformationen (1144), die Lizenzverwaltungseinheit enthaltend eine erste Speichereinheit (1207), die Lizenzinformationen der Lizenz speichert;
wobei das Bereitstellen durch die mindestens eine Dienstbereitstellungseinheit enthält:
Speichern, durch eine zweite Speichereinheit (1209, 1103), eines Exemplars der Lizenzinformationen (1144);
Erzeugen, durch eine Einstellungsempfangseinheit (1111, 1205), eines Berechtigungseinstellbildschirms zum Empfangen einer Einstellung der Berechtigung zur Verwendung des Dienstes für jeden Diensttyp;
Bewirken, dass der Berechtigungseinstellbildschirm in dem Endgerät (1202) angezeigt wird;
Empfangen der Einstellung der Berechtigung zur Verwendung des Dienstes von dem Berechtigungseinstellbildschirm; und
Einrichten, durch eine Berechtigungseinstelleinheit (1121), der Berechtigung für den von dem Endgerät (1202) empfangenen Dienst, wobei eine Anzahl von Benutzern, denen die Berechtigung durch die Lizenz zugeteilt wird, eine Anzahl von Benutzern, denen die Berechtigung zugeteilt werden kann, nicht übersteigt;
Vergleichen, durch die Berechtigungseinstelleinheit (1121, 1205), der Anzahl von Benutzern, denen Berechtigung durch die Lizenz zugeteilt wird, nachdem die Einstellung für die empfangene Berechtigung durchgeführt wird, mit der Anzahl von Benutzern, denen die Berechtigung durch die Lizenz zugeteilt werden kann, nachdem die Einstellung für den empfangenen Dienst durchgeführt wird, und Durchführen der Einstellung der von dem Endgerät (1202) empfangenen Berechtigung, wenn die Anzahl von Benutzern, denen die Berechtigung durch die Lizenz zugeteilt wird, nachdem die Einstellung für die empfangene Berechtigung durchgeführt wird, die Anzahl von Benutzern, denen die Berechtigung durch die Lizenz zugeteilt werden kann, nachdem die Einstellung für die empfangene Berechtigung durchgeführt wird, nicht übersteigt; und
Bestimmen, durch die Berechtigungseinstelleinheit (1121, 1205), wenn die Lizenz storniert wird, der Anzahl von Benutzern, denen die Berechtigung durch eine andere Lizenz als die stornierte Lizenz zugeteilt werden kann, und Berichten, dass die Anzahl von Benutzern, denen die Berechtigung zugeteilt wurde, die Anzahl von Benutzern, denen die Berechtigung durch die andere Lizenz als die stornierte Lizenz zugeteilt werden kann, übersteigt, wenn die Anzahl von Benutzern, denen die Berechtigung zugeteilt wurde, die Anzahl von Benutzern, denen die Berechtigung durch die andere Lizenz als die stornierte Lizenz zugeteilt werden kann, übersteigt.

## Revendications

1. Système de traitement d'informations incluant un appareil terminal (1202) et au moins un appareil de traitement d'informations, le système de traitement d'informations comprenant :
au moins une unité de fourniture de service (1208) configurée de manière à fournir un service correspondant à une autorité d'un utilisateur auquel l'autorité est allouée par une licence ; et
une unité d'administration de licence (1206, 1204) qui inclut une première unité de mémoire (1207) configurée de manière à stocker des informations de licence (1144) de la licence, et à administrer les informations de licence (1144) ;
dans lequel ladite au moins une unité de fourniture de service (1208, 1205) inclut :
une seconde unité de mémoire (1209, 1103) qui est configurée de manière à stocker une copie des informations de licence (1144) ; et
une unité de réception de configuration (1111, 1205) qui est configurée de manière à :
générer un écran de configuration d'autorité pour recevoir une configuration de l'autorité pour le service pour chaque type de service, amener l'écran de configuration d'autorité à être affiché dans l'appareil terminal (1202), et recevoir la configuration de l'autorité pour le service, en provenance de l'écran de configuration d'autorité ; et
une unité de configuration d'autorité (1121) configurée de manière à configurer l'autorité pour le service reçu en provenance de l'appareil terminal (1202), moyennant quoi un nombre d'utilisateurs auxquels l'autorité est allouée par la licence ne dépasse pas un nombre d'utilisateurs auxquels l'autorité peut être allouée ;
dans lequel l'unité de configuration d'autorité (1121, 1205) compare le nombre d'utilisateurs, auxquels l'autorité est allouée par la licence après que la configuration pour l'autorité reçue a été mise en œuvre, au nombre d'utilisateurs auxquels l'autorité peut être allouée par la licence après que la configuration pour le service reçu a été mise en œuvre, et met en œuvre la configuration de l'autorité reçue en provenance de l'appareil terminal (1202) si le nombre d'utilisateurs auxquels l'autorité est allouée par la licence après que la configuration pour l'autorité reçue a été mise en œuvre ne dépasse pas le nombre d'utilisateurs auxquels l'autorité peut être allouée par la licence après que la configuration pour l'autorité reçue a été mise en oeuvre ; et
dans lequel l'unité de configuration d'autorité (1121, 1205) détermine, lorsque la licence est annulée, le nombre d'utilisateurs auxquels l'autorité peut être allouée par une licence distincte de la licence annulée, et signale que le nombre d'utilisateurs auxquels l'autorité a été allouée dépasse le nombre d'utilisateurs auxquels l'autorité peut être allouée par la licence distincte de la licence annulée, si le nombre d'utilisateurs auxquels l'autorité a été allouée dépasse le nombre d'utilisateurs auxquels l'autorité peut être allouée par la licence distincte de la licence annulée.

2. Système de traitement d'informations selon la revendication 1,
dans lequel l'unité de réception de configuration (1111, 1205) amène l'appareil terminal (1202) à afficher le nombre d'utilisateurs auxquels l'autorité peut être allouée par au moins une licence, et un nombre d'utilisateurs auxquels l'autorité a été allouée par ladite au moins une licence.

3. Système de traitement d'informations selon la revendication 1,
dans lequel l'unité de réception de configuration (1111, 1205) amène l'appareil terminal (1202) à afficher le nombre d'utilisateurs auxquels l'autorité peut être allouée par une licence sélectionnée parmi au moins une licence, ainsi qu'un nombre d'utilisateurs auxquels l'autorité a été allouée par la licence, et reçoit la configuration de l'autorité pour le service, en désignant ladite une licence, le type de service, l'utilisateur et l'autorité, pour l'autorité.

4. Système de traitement d'informations selon l'une quelconque des revendications 1 à 3,
dans lequel, en réponse à un renouvellement de la licence, l'unité de configuration d'autorité (1121) détermine le nombre d'utilisateurs auxquels l'autorité peut être allouée par la licence renouvelée, et signale que le nombre d'utilisateurs auxquels l'autorité a été allouée dépasse le nombre d'utilisateurs auxquels l'autorité peut être allouée par la licence renouvelée, si le nombre d'utilisateurs auxquels l'autorité a été allouée dépasse le nombre d'utilisateurs auxquels l'autorité peut être allouée par la licence renouvelée.

5. Système de traitement d'informations selon l'une quelconque des revendications 1 à 4,
dans lequel l'unité de configuration d'autorité (1111, 1205) détermine, lorsque la licence est annulée, le nombre d'utilisateurs auxquels l'autorité peut être allouée par la licence distincte de la licence annulée, et libère une allocation de l'autorité de la licence à une partie de l'utilisateur, de sorte que le nombre d'utilisateurs auxquels l'autorité peut être allouée par la licence distincte de la licence annulée réside dans le nombre d'utilisateurs auxquels l'autorité peut être allouée, si le nombre d'utilisateurs auxquels l'autorité a été allouée dépasse le nombre d'utilisateurs auxquels l'autorité peut être allouée par la licence distincte de la licence annulée.

6. Système de traitement d'informations selon la revendication 5,
dans lequel l'unité de configuration d'autorité (1111, 1205) reçoit une configuration de l'utilisateur pour lequel l'autorité est de préférence maintenue afin d'être allouée.

7. Support d'enregistrement non transitoire lisible par ordinateur, sur lequel est enregistré un programme, le programme étant exécuté par un processeur dans un système de traitement d'informations incluant un appareil terminal (1202) et au moins un appareil de traitement d'informations, dans lequel le programme est exécuté par le processeur en vue d'amener le système de traitement d'informations à mettre en œuvre :
au moins une unité de fourniture de service (1208) configurée de manière à fournir un service correspondant à une autorité d'un utilisateur auquel l'autorité est allouée par une licence ;
une unité d'administration de licence (1206, 1204) qui inclut une première unité de mémoire (1207) configurée de manière à stocker des informations de licence (1144) de la licence, et qui administre les informations de licence (1144) ;
dans lequel ladite au moins une unité de fourniture de service inclut :
une seconde unité de mémoire (1209, 1103) qui est configurée de manière à stocker une copie des informations de licence (1144) ; et
une unité de réception de configuration (1111, 1205) qui est configurée de manière à :
générer un écran de configuration d'autorité pour recevoir une configuration de l'autorité pour le service pour chaque type de service, amener l'écran de configuration d'autorité à être affiché dans l'appareil terminal (1202), et recevoir la configuration de l'autorité pour le service, en provenance de l'écran de configuration d'autorité ; et
une unité de configuration d'autorité (1121) configurée de manière à configurer l'autorité pour le service reçu en provenance de l'appareil terminal (1202), moyennant quoi un nombre d'utilisateurs auxquels l'autorité est allouée par la licence ne dépasse pas un nombre d'utilisateurs auxquels l'autorité peut être allouée ;
dans lequel l'unité de configuration d'autorité (1121, 1205) compare le nombre d'utilisateurs, auxquels l'autorité est allouée par la licence après que la configuration pour l'autorité reçue a été mise en œuvre, au nombre d'utilisateurs auxquels l'autorité peut être allouée par la licence après que la configuration pour le service reçu a été mise en œuvre, et met en œuvre la configuration de l'autorité reçue en provenance de l'appareil terminal (1202), si le nombre d'utilisateurs auxquels l'autorité est allouée par la licence après que la configuration pour l'autorité reçue a été mise en œuvre ne dépasse pas le nombre d'utilisateurs auxquels l'autorité peut être allouée par la licence après que la configuration pour l'autorité reçue a été mise en oeuvre ; et
dans lequel l'unité de configuration d'autorité (1121, 1205) détermine, lorsque la licence est annulée, le nombre d'utilisateurs auxquels l'autorité peut être allouée par une licence distincte de la licence annulée, et signale que le nombre d'utilisateurs auxquels l'autorité a été allouée dépasse le nombre d'utilisateurs auxquels l'autorité peut être allouée par la licence distincte de la licence annulée, si le nombre d'utilisateurs auxquels l'autorité a été allouée dépasse le nombre d'utilisateurs auxquels l'autorité peut être allouée par la licence distincte de la licence annulée.

8. Procédé d'administration d'une licence, mis en œuvre dans un système de traitement d'informations incluant un appareil terminal (1202) et au moins un appareil de traitement d'informations, le procédé d'administration de la licence comprenant les étapes ci-dessous consistant à :
fournir, par le biais d'au moins une unité de fourniture de service (1208), un service correspondant à une autorité d'un utilisateur auquel l'autorité est allouée par une licence ;
administrer, par le biais d'une unité d'administration de licence (1206, 1204), les informations de licence (1144), l'unité d'administration de licence incluant une première unité de mémoire (1207) stockant des informations de licence de la licence ;
dans lequel l'étape de fourniture, par ladite au moins une unité de fourniture de service, inclut les étapes ci-dessous consistant à :
stocker, par le biais d'une seconde unité de mémoire (1209, 1103), une copie des informations de licence (1144) ;
générer, par le biais d'une unité de réception de configuration (1111, 1205), un écran de configuration d'autorité, afin de recevoir une configuration de l'autorité en vue de l'utilisation du service pour chaque type de service ;
amener l'écran de configuration d'autorité à être affiché dans l'appareil terminal (1202) ;
recevoir la configuration de l'autorité en vue de l'utilisation du service, en provenance de l'écran de configuration d'autorité ; et
configurer, par le biais d'une unité de configuration d'autorité (1121), l'autorité pour le service reçu en provenance de l'appareil terminal (1202), moyennant quoi un nombre d'utilisateurs auxquels l'autorité est allouée par la licence ne dépasse pas un nombre d'utilisateurs auxquels l'autorité peut être allouée ;
comparer, par le biais de l'unité de configuration d'autorité (1121, 1205), le nombre d'utilisateurs, auxquels l'autorité est allouée par la licence après que la configuration pour l'autorité reçue a été mise en œuvre, au nombre d'utilisateurs auxquels l'autorité peut être allouée par la licence après que la configuration pour le service reçu a été mise en œuvre, et mettre en œuvre la configuration de l'autorité reçue en provenance de l'appareil terminal (1202), si le nombre d'utilisateurs auxquels l'autorité est allouée par la licence après que la configuration pour l'autorité reçue a été mise en œuvre ne dépasse pas le nombre d'utilisateurs auxquels l'autorité peut être allouée par la licence après que la configuration pour l'autorité reçue a été mise en oeuvre ; et
déterminer, par le biais de l'unité de configuration d'autorité (1121, 1205), lorsque la licence est annulée, le nombre d'utilisateurs auxquels l'autorité peut être allouée par une licence distincte de la licence annulée, et signaler que le nombre d'utilisateurs auxquels l'autorité a été allouée dépasse le nombre d'utilisateurs auxquels l'autorité peut être allouée par la licence distincte de la licence annulée, si le nombre d'utilisateurs auxquels l'autorité a été allouée dépasse le nombre d'utilisateurs auxquels l'autorité peut être allouée par la licence distincte de la licence annulée.
